(19) Europäisches Patentamt
European Patent Office
Office européen des brevets

(11) **EP 2 840 006 B1**

(12) **EUROPÄISCHE PATENTSCHRIFT**

(45) Veröffentlichungstag und Bekanntmachung des Hinweises auf die Patenterteilung:
**13.03.2019 Patentblatt 2019/11**

(51) Int Cl.:
***B60W 30/14*** *(2006.01)*

(21) Anmeldenummer: **14001125.5**

(22) Anmeldetag: **26.03.2014**

(54) **Fahrerassistenzsystem und Betriebsverfahren für ein Fahrerassistenzsystem zur Fahrzeug-Längsregelung**

Driver assistance system and method of operation for a driver assistance system for longitudinal control of a vehicle

Système d'assistance du conducteur et procédé de fonctionnement d'un système d'assistance du conducteur pour le contrôle longitudinal d'un véhicule

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.08.2013 DE 102013013243**

(43) Veröffentlichungstag der Anmeldung:
**25.02.2015 Patentblatt 2015/09**

(73) Patentinhaber: **MAN Truck & Bus AG**
**80995 München (DE)**

(72) Erfinder: **Gutzeit, Reinhard**
**82049 Pullach (DE)**

(74) Vertreter: **v. Bezold & Partner Patentanwälte - PartG mbB**
**Akademiestraße 7**
**80799 München (DE)**

(56) Entgegenhaltungen:
EP-A1- 2 529 993          DE-A1-102010 028 637
DE-A1-102011 002 275    US-A1- 2010 256 835

**Beschreibung**

Die Erfindung betrifft ein Fahrerassistenzsystem zur Fahrzeug-Längsregelung eines Fahrzeugs bezüglich eines Fremdfahrzeugs, vorzugsweise zur Geschwindigkeits- und/oder Abstandsregelung. Die Erfindung betrifft weiterhin ein Betriebsverfahren für ein Fahrerassistenzsystem zur Fahrzeug-Längsregelung eines Fahrzeugs.

Insbesondere Berufskraftfahrer werden seit mehreren Jahren während der Fahrt mit einer Zunahme von Informationen über den Fahrzeugzustand, die Straßen- und Umgebungsbedingungen und mit Logistikinformationen belastet. Dieser Entwicklung wurde seitens der Fahrzeughersteller durch Einführung von Fahrerassistenzsystemen zur Entlastung des Fahrzeugführers Rechnung getragen. Für den Bereich der Fahrzeug-Längsregelung sind aktiv eingreifende Regelsysteme in Serie gegangen, die sowohl in unkritischen - im Sinne einer Unfallgefahr - Fahrsituationen als auch in kritischen Fahrsituationen wirken.

Ein System zur Längsregelung bei unkritischen Situationen ist beispielsweise der Tempomat mit Beschleunigungsfunktion und Abstandshaltung mit geringer Verzögerungswirkung (max. ca. -0,3 g). Ein Notbremsassistent wirkt andererseits in kritischen Fahrsituationen zur Vermeidung eines Auffahrunfalls mit hoher Verzögerungswirkung (max. ca. -0,8 g).

Solchen aktuellen Seriensystemen mangelt es aber an ausreichender Speisung zeitaktueller Fahrzustands- und Umgebungsinformationen, um eine gleichmäßig gute Wirkung in unterschiedlichen Fahrsituationen gewährleisten zu können. Derartige Systeme sind daher in unzureichender Weise eingerichtet, die Fahrzeug-Längsregelung an die im reellen Straßenverkehr auftretenden verschiedensten Verkehrs- und Fahrsituationen anzupassen. Die Abstandsregelung derartiger Systeme wird daher oftmals mit einem zusätzlichen Sicherheitspuffer versehen, der die Fahrzeuge auf einen größeren Abstand als eigentlich notwendig einregelt, um zu verhindern, dass aufgrund von unvorhergesehenen Abweichungen der Annahmen betreffend das Bremsverhalten eine Kollision auftreten kann. Dies führt jedoch zu einer ineffizienten Verkehrsraumausnutzung und zu einer mangelnden Akzeptanz derartiger Systeme, insbesondere beim Einsatz in Nutzfahrzeugen.

Ein manuelles Nachjustieren des jeweiligen Regelsystems seitens des Fahrers kann sicherheitsbedingt nur in zeitunkritischen Situationen erfolgen. Zudem kann die vom Fahrer gewählte Einstellung nicht die der aktuellen Fahrsituation angemessenste Einstellung sein, so dass ein manuelles Nachjustieren fehleranfällig ist.

Die D1 (DE 10 2011 002 275 A1) offenbart ein Verfahren zur Prognose des Fahrverhaltens eines vorausfahrenden Fahrzeugs durch eine Kraftfahrzeugsteuerungseinrichtung eines hinter dem vorausfahrenden Fahrzeug fahrenden Fahrzeugs. So wird zunächst durch die Kraftfahrzeugsteuerungseinrichtung des hinter dem vorausfahrenden Fahrzeug fahrenden Fahrzeugs aus der jeweiligen aktuellen Position des hinter dem vorausfahrenden Fahrzeug fahrenden Fahrzeugs und aus dem jeweiligen aktuellen Abstand zum vorausfahrenden Fahrzeug die jeweilige aktuelle Position des vorausfahrenden Fahrzeugs ermittelt. Die Kraftfahrzeugsteuerungseinrichtung des hinter dem vorausfahrenden Fahrzeug fahrenden Fahrzeugs ermittelt aus aktuellen Position des vorausfahrenden Fahrzeugs passende Fahrtstreckendaten und aus für die jeweilige aktuelle Position des vorausfahrenden Fahrzeugs ermittelten fahrdynamischen Daten des vorausfahrenden Fahrzeugs Kennwerte für das vorausfahrende Fahrzeug. Anschließend wird durch die Kraftfahrzeugsteuerungseinrichtung des hinter dem vorausfahrenden Fahrzeug fahrenden Fahrzeugs, aus den Kennwerten für das vorausfahrende Fahrzeug und aus den Fahrtstreckendaten einer dem vorausfahrenden Fahrzeug voraus liegenden Fahrtstrecke das Fahrverhalten des vorausfahrenden Fahrzeugs prognostiziert.

Die D2 (EP 2 529 993 A1) offenbart ein Fahrerassistenzsystem, wobei die Steuerungseinrichtung zur prädikativen Ermittlung eines vor dem Kraftfahrzeug liegenden Streckenabschnitts, der vom Kraftfahrzeug wahrscheinlich befahren wird, anhand der ermittelten momentanen Fahrzeugposition und positionsabhängig bestimmten Streckendaten und zur Steuerung eines oder mehrerer Aktuatoren in Abhängigkeit wenigstens eines dem ermittelten Streckenabschnitt zugeordneten, in seiner geografischen Position erfassbaren Streckenattribut ausgebildet ist.

Eine Aufgabe der Erfindung ist es, ein Fahrerassistenzsystem und ein entsprechendes Betriebsverfahren bereitzustellen, die die Fahrzeug-Längsregelung besser an unterschiedliche Verkehrs- und Fahrsituationen anpassen können, um durch eine situationsangepasste Abstandsregelung die Kollisionsgefahr mit einem Fremdfahrzeug zu reduzieren und gleichzeitig eine effiziente Verkehrsraumausnutzung zu ermöglichen.

Die vorstehend beschriebenen Aufgaben werden erfindungsgemäß gelöst durch ein Betriebsverfahren für ein Fahrerassistenzsystem zur Fahrzeug-Längsregelung nach Anspruch 1, und durch ein Fahrerassistenzsystem zur Fahrzeug-Längsregelung nach Anspruch 9. Bevorzugte Ausführungsbeispiele der Erfindung werden in den abhängigen Ansprüchen beschrieben.

Bei dem erfindungsgemäßen Betriebsverfahren für ein Fahrerassistenzsystem zur Fahrzeug-Längsregelung eines Fahrzeugs bezüglich eines Fremdfahrzeugs fließt in die Fahrzeug-Längsregelung eine voraussichtliche Bahnkurve des Fahrzeugs und/oder eine voraussichtliche Bahnkurve eines Fremdfahrzeugs ein.

Der Erfindung liegt die Erkenntnis zu Grunde, dass gekrümmte Bahnkurven sich vielfältig erschwerend auf das Reglerverhalten auswirken. So werden bei Steigungs-/ Gefällefahrten aber auch Kurvenfahrten Breite und Höhe der projizierten Silhouette der Fahrzeuge verzerrt. Gleichermaßen entsprechen linear gemessene Abstände nicht den tatsächlichen Bogenmassen. Ebenso verläuft die Fahrspurtrennlinie typischerweise nicht strahlenförmig. Auch wirken auf die Fahrzeuge Kräfte quer und senkrecht zum Fahrzeug, welche sowohl die Fahrstabilität als auch das Bremsvermögen herabsetzen bzw. beeinflussen.

Ferner begrenzen enge Kurven, insbesondere reibwertabhängig, mögliche Fahrgeschwindigkeiten aufgrund wirkender Querkräfte. Gleichermaßen kann sich in engen Kurven eine Blindheit oder zumindest eine Reichweitenverkürzung der Sensorik einstellen, welche die abgetastete Bahnkurvenlänge so unterschreitet, dass eine Geschwindigkeitsreduzierung in Anbetracht des aktuell ermittelten Bremsweges für die aktuelle Sensorsichtweite erforderlich wird.

Aus den voraussichtlichen, d.h. vorhergesagten oder wahrscheinlichen Bahnkurven kann so beispielsweise ein Bremsvorgang der Fahrzeuge vorhergesagt werden, beispielsweise bei der voraussichtlichen Einfahrt in eine Kurve. Mögliche Gefahrensituation und Abstandsverkürzungen können daher besser antizipiert und bei der Längsregelung berücksichtigt werden. Zudem kann aus sich kreuzenden voraussichtlichen Bahnkurven der Ort und Zeitpunkt einer möglichen Kollision bestimmt werden.

Vorzugsweise werden die voraussichtlichen Bahnkurven des eigenen Fahrzeugs und des vorausfahrenden Fremdfahrzeugs als 3-dimensionale voraussichtliche Bahnkurven bestimmt, so dass auch unterschiedliche Steigungen und Gefälle der Bahnkurven bei der Längsregelung berücksichtigt werden können.

Die 3-dimensionale Bahnkurve des Fahrzeugs kann als eine zurückgelegte und bis zum vorausfahrenden Fahrzeug projizierte Bahnkurve anhand des Abstandes zum vorausfahrenden Fremdfahrzeug mittels Radar, GPS-Daten und/oder Neigungssensoren ermittelt werden.

Ferner umfasst das Betriebsverfahren den Schritt: Bestimmen einer Steigung der voraussichtlichen Bahnkurve des Fahrzeugs und einer Steigung der voraussichtlichen Bahnkurve des vorausfahrenden Fremdfahrzeugs, wobei die bestimmten Steigungen in die Fahrzeug-Längsregelung einfließen. Des weiteren umfasst das Betriebsverfahren die weiteren Schritte: Anpassen eines von der Längsregelung einzuhaltenden Sicherheitsabstandes zwischen dem Fahrzeug und dem Fremdfahrzeug in Abhängigkeit der Differenz der beiden Steigungen, derart dass der Abstand zwischen dem Fahrzeug und dem vorausfahrenden Fremdfahrzeug vergrößert wird, wenn die Steigung der Bahnkurve des vorausfahrenden Fremdfahrzeugs größer ist als die Steigung der Bahnkurve des Fahrzeugs. Der Abstand zwischen dem Fahrzeug und dem vorausfahrendem Fremdfahrzeug wird dagegen verkleinert, wenn die Steigung der Bahnkurve des vorausfahrendem Fremdfahrzeugs kleiner ist als die Steigung der Bahnkurve des Fahrzeugs. Hierdurch kann die je nach aktueller Steigung unterschiedliche Auswirkung der Hangab-/Hangauftriebskraft berücksichtigt werden. Eine negative Steigung beschreibt dabei ein Gefälle.

Die 3-dimensionale Bahnkurve des vorausfahrenden Fremdfahrzeugs kann in Abhängigkeit einer sich verändernden Breite und/oder Höhe der Hecksilhouette des Fremdfahrzeugs ermittelt werden. Je nach Stärke der Fahrbahnkrümmung nach rechts oder links kann ein unterschiedlich großer Anteil der hinteren Fahrzeugsilhouette erfasst werden. Auf Basis dieser erfassten Anteile können Drehungen des Fremdfahrzeugs relativ zum eigenen Fahrzeug erfasst werden, um eine Krümmung oder einen Verlauf der Bahnkurve des Fremdfahrzeugs zu bestimmen. In vergleichbarer Weise verändert sich die sichtbare Höhe der Hecksilhouette eine Fremdfahrzeugs in Abhängigkeit von Steigung und Gefälle der Fahrbahn, so dass aus der erfassten Höhenänderungen der Hecksilhouette des Fremdfahrzeugs die vertikale Bahnkurve des Fremdfahrzeugs abgeleitet werden kann.

Vorzugsweise wird die 3-dimensionale Bahnkurve des vorausfahrenden Fremdfahrzeugs auch in Abhängigkeit einer seitlichen Silhouette und Fahrzeuglänge ermittelt, die bei seitlichen Krümmungen der Fahrbahnen des Fremdfahrzeugs erfasst werden können. Dies hat den Vorteil, dass über diese zusätzlichen Messwerte die Fahrbahnkrümmung genauer bestimmt werden kann.

Gemäß einer alternativen Ausführungsform kann die dreidimensionale Bahnkurve des Fremdfahrzeugs direkt mittels Fahrzeug-zu-Fahrzeug Kommunikation von diesem Fremdfahrzeug empfangen werden. Dies hat den Vorteil, dass die Bahnkurve des Fremdfahrzeugs nicht vom Fahrzeug selbst bestimmt werden müssen, sondern unter Vermeidung etwaiger Messungenauigkeiten direkt vom Fremdfahrzeug empfangen werden kann. Dies setzt allerdings voraus, dass sowohl das Fahrzeug als auch das Fremdfahrzeug zum Senden bzw. Empfangen derartiger Daten entsprechend eingerichtet sind. Alternativ könnte das Fahrzeug derartige Informationen auch von einer stationären Sendestation am Straßenrand empfangen.

Zusätzlich können der Straßentyp und/oder der dreidimensionale Verlauf der Bahnkurve der Straße ermittelt werden und in die Längsregelung einfließen.

Es ist besonders vorteilhaft, wenn zusätzlich zumindest ein Parameter betreffend einen aktuellen Fahrbahnzustand insbesondere einen Zustand der Fahrbahnoberfläche oder des Fahrbahnbelags, einen Fahrbahnreibwert, eine Fahrzeugklasse des Fremdfahrzeugs, einen Fahrzeugbeladungszustand, einen Zustand der Fahrzeugbremsanlage und/oder eines reifenspezifischen Parameters des Fahrzeugs ermittelt wird, und wobei zumindest einer dieser Parameter in die Längsregelung einfließt.

Ein besonders vorteilhafter fahrbahnspezifischer Parameter ist der Fahrbahnreibwert, da Unterschiede im Fahrbahnreibwert einen hohen Einfluss auf das Bremsverzögerungsvermögen sowohl des Fahrzeugs als auch des Fremdfahrzeugs haben und somit den erforderlichen Sicherheitsabstand maßgeblich beeinflussen.

Des Weiteren kann eine vorgegebene Anzahl von Fahrbahnzustandsklassen und/oder Fahrbahnreibwertklassen vorgesehen sein, wobei wenigstens eine dieser Klassen anhand des aktuell bestimmten fahrbahnspezifischen Parameters ausgewählt und zur Fahrzeug-Längsregelung berücksichtigt wird.

Vorzugsweise umfasst das Betriebsverfahren weiter den Schritt der Bestimmung einer Fahrzeugklasse eines Fremdfahrzeugs, wobei die Fahrzeug-Längsregelung in Abhängigkeit zumindest eines aus der bestimmten Fahrzeugklasse herleitbaren Parameters erfolgt.

Beispielsweise kann in Abhängigkeit der bestimmten Fahrzeugklasse des Fremdfahrzeugs das spezifische Bremsverzögerungsvermögen der Fahrzeugklasse bestimmt werden. Dies hat den Vorteil, dass die Bestimmung des erforderlichen Sicherheitsabstandes bei der Fahrzeug-Längsregelung situativ an die Paarungen der Fahrzeugklasse des Fahrzeugs und Fremdfahrzeugs angepasst werden kann.

Eine besonders genaue Längsregelung auf den tatsächlich erforderlichen Sicherheitsabstand wird ermöglicht, wenn die Längsregelung in Abhängigkeit sowohl des aktuellen fahrbahnspezifischen Parameters sowie der Fahrzeugklasse des Fremdfahrzeugs erfolgt. So umfasst das vorliegende Betriebsverfahren vorzugsweise weiter das Anpassen eines vorbekannten Parameters betreffend ein Bremsverzögerungsvermögen des eigenen Fahrzeugs in Abhängigkeit des aktuellen fahrbahnspezifischen Parameters und das Bestimmen eines Parameters betreffend ein Bremsverzögerungsvermögen des Fremdfahrzeugs in Abhängigkeit der bestimmten Fahrzeugklasse des Fremdfahrzeugs und des aktuellen fahrbahn-spezifischen Parameters. Hierbei erfolgt die Fahrzeug-Längsregelung in Abhängigkeit der Parameter betreffend das Bremsverzögerungsvermögen des Fahrzeugs und des Fremdfahrzeugs.

Bei ungünstigen Fahrbahnreibwerten, insbesondere bei Niederschlag, werden vor allem die vergleichsweise hohen Bremsverzögerungsvermögen von Sportwagen oder Motorrädern fahrbahnreibwertbedingt sehr stark nivelliert, so dass sich teilweise sogar eine Verschlechterung im Vergleich zur Masse aller Fahrzeuge einstellen kann. Dies resultiert beispielsweise aus dem Aufschwimmen extrem breiter Reifen mangels zügiger Wasserverdrängung aus dem Reifenprofil. Bei solchen Fahrbahnzuständen kann ein schwerer LKW ein vergleichbares oder gar ein besseres Bremsverhalten als ein Sportwagen aufweisen, so dass der Sicherheitsabstand eines LKWs zu einem vorausfahrenden Motorrad zu Gunsten der Verkehrsraumnutzung gefahrlos im Vergleich zu einer trockenen Asphaltfahrbahn verkürzt werden kann. Mit anderen Worten variiert der tatsächlich erforderliche Sicherheitsabstand stark in Abhängigkeit der jeweiligen Fahrzeugklassen des eigenen Fahrzeugs und des Fremdfahrzeugs unter Berücksichtigung des aktuellen Fahrbahnzustands, was mit der vorliegenden Erfindung entsprechend bei der Längsregelung berücksichtigt werden kann.

Die Fahrzeugklassifizierung des Fremdfahrzeugs erfolgt vorzugsweise anhand einer Bestimmung der rückwärtigen Silhouette des vorausfahrenden Fremdfahrzeugs. Beispielsweise kann ein Abstand, eine Höhe und/oder eine Breite des Fremdfahrzeugs bestimmt werden, um die rückwärtige Silhouette des Fremdfahrzeugs zu bestimmen. Da verschiedene Fahrzeugklassen, wie Motorräder, Sportwagen, PKWs oder LKWs verschiedene typische Bauhöhen und/oder -breiten aufweisen, kann anhand dieser Abmaße bzw. der daraus resultierenden Hecksilhouette die Fahrzeugklasse beispielsweise mittels Radarsensorik bestimmt werden.

Gemäß einer besonders bevorzugten Ausführungsform können die bestimmten Bahnkurven auch zur genaueren Bestimmung der Fahrzeugklasse des Fremdfahrzeugs verwendet werden. Wie eingangs erwähnt, werden bei Steigungs-/ Gefällefahrten aber auch Kurvenfahrten Breite und Höhe der projizierten Silhouette der Fahrzeuge verzerrt. Gleichermaßen entsprechen linear gemessene Abstände nicht den tatsächlichen Bogenmassen. Falls die 3-dimensionale Bahnkurve des Fremdfahrzeugs, d.h. die Kurvenform, die die aktuell zurückgelegte Wegstrecke des Fremdfahrzeugs beschreibt, eine gekrümmte Bahnkurve ist, kann vorzugsweise die projizierte, aus vier Eckpunkten bestehende bzw. von vier Eckpunkten begrenzte Silhouette des Fremdfahrzeugs in Abhängigkeit von der 3-dimensionalen Bahnkurve geometrisch korrigiert werden, um so eine genauere Bestimmung der Fahrzeugklasse des Fremdfahrzeugs in Abhängigkeit der korrigierten Silhouette zu ermöglichen. Durch die geometrische Korrektur werden die durch die gekrümmte Bahnkurve verursachten Verzerrungseffekte der erfassten Silhouette rückgängig gemacht. Die korrigierte Silhouette entspricht der Silhouette, die ein in der Ebene gerade voraus fahrendes Fremdfahrzeug erzeugen würde.

Die Genauigkeit der Fahrzeuglängsregelung kann zusätzlich durch Bestimmung einer oder mehrerer aktueller fahrzeugspezifischer Parameter, die das Bremsverzögerungsvermögen des Fahrzeugs beeinflussen und in die Fahrzeug-Längsregelung einfließen, verbessert werden.

Vorzugsweise umfasst ein aktueller fahrzeugspezifischer Parameter den Fahrzeugtyp des eigenen Fahrzeugs. Der Fahrzeugtyp des eigenen Fahrzeugs ist konstruktionsbedingt von vornherein bekannt und entweder im Fahrerassistenzsystem fest eingerichtet oder wird einmalig bei Betriebsaufnahme eingestellt.

Weiterhin kann der aktuelle fahrzeugspezifische Parameter einen Beladungszustand umfassen. Der Beladungszustand kann als das aktuelle Gewicht des Fahrzeugs, das aktuelle Gewicht eines Anhängers und/oder das aktuelle Gewicht einer Beladung ermittelt werden. Insbesondere bei Nutzfahrzeugen kann das aktuelle Fahrzeuggewicht durch Beladung oder Personen stark variieren. Da das fahrzeugspezifische Bremsverzögerungsvermögen von der aktuellen Beladung abhängig ist, kann eine genauere Fahrzeug-Längsregelung erreicht werden, wenn die Fahrzeugbeladung aktuell erfasst wird und in die Fahrzeug-Längsregelung einfließt. In ähnlicher Weise kann die Genauigkeit der Fahrzeug-Längsregelung verbessert werden, wenn das Vorhandensein eines Anhängers erkannt wird und in die Fahrzeuglängsregelung einfließt.

Des Weiteren kann der aktuelle fahrzeugspezifische Parameter auch spezifizieren, ob ein Anhänger an- oder abgekoppelt ist. Durch An- oder Abkupplung eines Anhängers oder Aufliegers ergeben sich starke Differenzen im Brems-(Beschleunigungs-)vermögen, so dass es vorteilhaft ist, den zutreffenden Zustand des Gesamtfahrzeugs zu erkennen und bei der Einstellung des Sicherheitsabstandes zu berücksichtigen.

Gemäß einer weiteren vorteilhaften Ausgestaltungsform werden ein oder mehrere reifenspezifische Parameter des eigenen Fahrzeugs erfasst, die in die Längsregelung einflie-βen. Beispiele für reifenspezifische Parameter sind der Reifenluftdruck, der Reifenzustand und/oder eine Reifenklasse. So können allein durch den Reifentyp oder die Reifenklasse verursachte Streuungen in Reibung zwischen Fahrbahn und Reifen das Bremsverzögerungsvermögen des Fahrzeugs stark beeinflussen. So haben je nach Reifentyp Sommer-, Winter-, Ganzjahres- oder Off-Road-Reifen unterschiedliche Reibungscharakteristika zwischen Fahrbahn und Reifen. Folglich kann bei einer zusätzlichen Berücksichtigung des Reifentyps als Parameter bei der Längsregelung eine verbesserte Genauigkeit erreicht werden. In vergleichbarer Weise ergeben sich insbesondere bei Niederschlag Schwankungen in der Reibung zwischen Fahrbahn und Reifen für unterschiedliche Reifenprofiltiefen.

Ferner ist es vorteilhaft, wenn zusätzlich der Zustand der Bremsanlage als fahrzeugspezifischer Parameter in die Längsregelung einfließt. Sowohl der aktuelle Belastungs- als auch der Wartungszustand der Bremsanlage am eigenen Fahrzeug können einen signifikanten Einfluss auf das Abbremsvermögen des eigenen Fahrzeugs haben. So lassen beispielsweise Trommelbremsen unter Belastung der mitunter ungleichen Ausdehnung der topfförmigen Trommel in ihrer Wirkung stark nach. Ebenso kann die Wirkung der Bremsbeläge durch Hitze und Verschleiß abfallen.

Das erfindungsgemäße Fahrerassistenzsystem zur Fahrzeug-Längsregelung eines Fahrzeugs bezüglich eines Fremdfahrzeugs umfasst eine Reglereinheit, die zur Durchführung des Betriebsverfahrens, wie oben beschrieben, eingerichtet ist. Die zuvor beschriebenen Aspekte des Betriebsverfahrens gelten somit auch für die Reglereinheit des Fahrerassistenzsystems.

Bevorzugte Ausführungsformen der vorliegenden Erfindung werden im Folgenden beispielsweise und exemplarisch unter Bezugnahme auf die beigefügten Zeichnungen näher beschrieben.

Fig. 1      zeigt ein Blockdiagramm und illustriert beispielhaft die ermittelten Daten und berechneten Funktionsgrößen eines Fahrerassistenzsystems gemäß einem Ausführungsbeispiel;

Fig. 2      zeigt eine Tabelle mit typischen Bremsverzögerungsvermögen in Abhängigkeit von verschiedenen fahrbahn- und fahrzeugspezifischen Parametern gemäß einem Ausführungsbeispiel;

Fig. 3      illustriert den Abstand und Einfallswinkel zwischen Fahrzeug und Fremdfahrzeug sowie die Erkennung der Fahrzeugklasse gemäß einem Ausführungsbeispiel;

Fig. 4      zeigt ein Ablaufdiagramm zur Illustration eines Regelungsablaufs für eine typische Fahrsituation gemäß einem Ausführungsbeispiel;

Fig. 5A und 5B      illustrieren schematisch die Erkennung des Straßenverlaufs anhand der Veränderung der Fahrzeugsilhouetten gemäß einem Ausführungsbeispiel;

Fig. 6      zeigt ein Ablaufdiagramm zur Illustration eines Regelungsablaufs für eine weitere Fahrsituation gemäß einem Ausführungsbeispiel;

Fig. 7A      illustriert schematisch die im Ablaufdiagramm von Fig. 6 beschriebene Fahrsituation;

Fig. 7B      illustriert schematisch eine Reaktionsphase, die dem Fahrer im Ablaufdiagramm gemäß Fig. 6 eingeräumt wird;

Fig. 8      zeigt ein Ablaufdiagramm zur Illustration eines Regelungsablaufs für eine weitere Fahrsituation gemäß einem Ausführungsbeispiel; und

Fig. 9      illustriert schematisch die Fahrsituation gemäß dem Ablaufdiagramm aus Fig. 8.

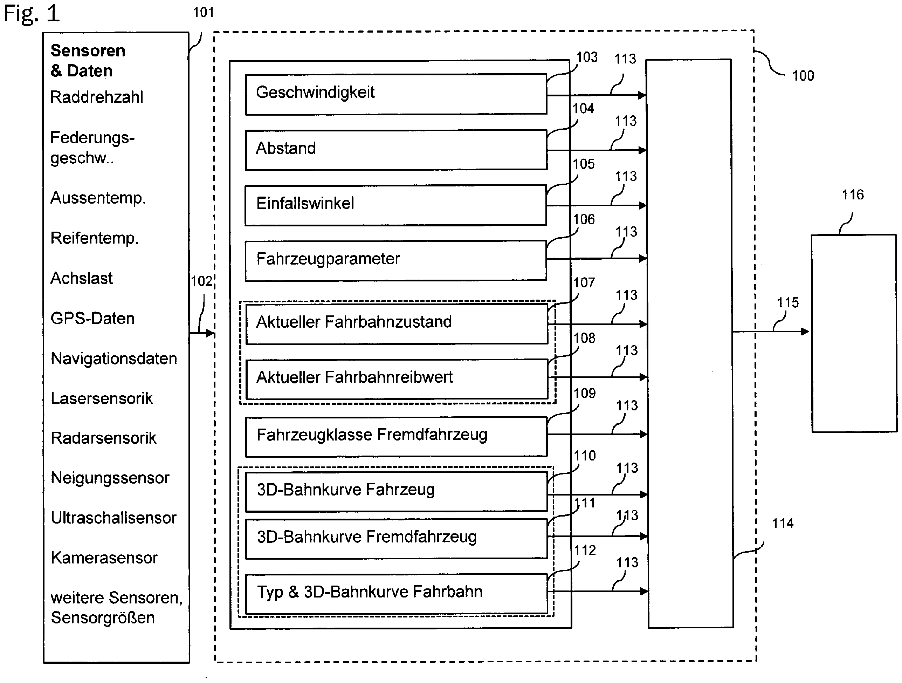

Das Blockdiagramm der Fig. 1 illustriert die verwendeten Sensoren und Daten 101 und die damit ermittelten Funktionsgrößen 103 bis 112, die in die Abstandsregelung einfließen können. Die verwendeten Sensoren und Daten 101 umfassen die aktuelle Raddrehzahl, Federungsgeschwindigkeit, Außentemperatur, Reifentemperatur und Achslast. Die verwendeten Sensoren und Daten 101 umfassen weiterhin GPS-Daten, Navigationsdaten oder Daten, die mittels Lasersensorik, Radarsensorik, einem Neigungssensor, Ultraschallsensor, einem Kamerasensor oder weiterer Sensorgrößen ermittelt werden. Bei den zuvor genannten Daten und Sensoren 101 handelt es sich um aus dem Stand der Fahrzeugtechnik bekannte Messgrößen und Sensoren.

Diese erfassten Daten 101 werden über eine Datenverbindung 102 an ein Fahrerassistenzsystem zur Fahrzeug-Längsregelung 100 übermittelt. Mittels der übermittelten Daten 101 werden mehrere Funktionsgrößen bzw. fahrbahn- und fahrzeugspezifische Parameter 103 bis 112 ermittelt, die in die Abstandsregelung einer Reglereinheit 114 einfließen.

Eine aus dem Stand der Technik bekannte Funktionsgröße zur Längsregelung ist die eigene Fahrgeschwindigkeit 103 des Fahrzeugs 1. Diese kann über die Raddrehzahl und/oder mittels GPS-Daten ermittelt werden.

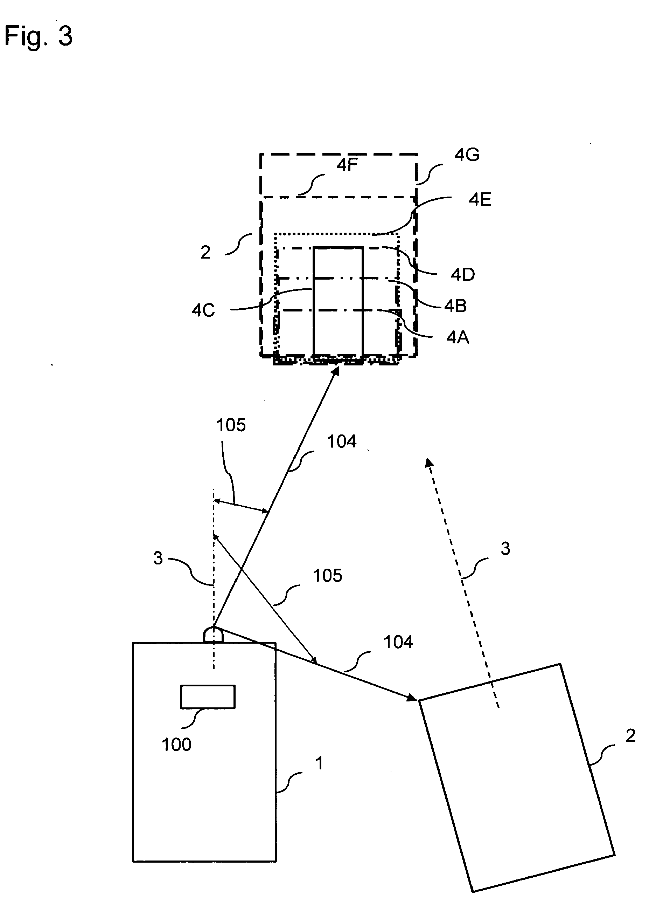

Der zeitaktuell gemessene kürzeste Abstand 104 zum Fremdfahrzeug 2 und dessen Veränderung kann beispielsweise mittels Radarsignalen ermittelt werden, die am Fremdfahrzeug 2 reflektiert werden. Aus der eigenen Fahrgeschwindigkeit 103 und dem zeitlichen Verlauf des gemessenen Abstands zum Fremdfahrzeug 2 kann die Fahrgeschwindigkeit 103 des Fremdfahrzeugs 2 sowie ein zeitaktuelles Brems- bzw. Beschleunigungsverhalten des Fremdfahrzeugs 2 und des Fahrzeugs 1 ermittelt werden. Der kürzeste Abstand ist in Fig. 3 als Länge des Pfeils 104 dargestellt. Bei einem gerade oder leicht seitlich versetzt vorausfahrenden Fremdfahrzeug 2 (oberes Fahrzeug in Fig. 3) entspricht der Abstand im Wesentlichen der Entfernung von der Frontsilhouette des Fahrzeugs 1 zur Mitte der Hecksilhouette des Fremdfahrzeugs 2. Bei einem sich seitlich von hinten annähernden Fremdfahrzeug 2 (unteres Fahrzeug in Fig. 3) wird der kürzeste Abstand im Wesentlichen von dem dem Fahrzeug 1 zugewandten, vorderen seitlichen Karosserieabschnitt des Fremdfahrzeugs 2 bestimmt.

Falls die Fahrtrichtung zwischen eigenem Fahrzeug 1 und Fremdfahrzeug 2 nicht identisch ist, ist der Einfallswinkel 105 zwischen Fahrzeug 1 und Fremdfahrzeug 2 eine für die Längsregelung wichtige Größe, insbesondere bei seitlicher Annäherung oder Einschervorgängen von Fremdfahrzeugen 2. Wie in Fig. 3 illustriert, ist der Einfallswinkel 105 der Winkel zwischen Fahrtrichtung 3 des Fahrzeugs 1 und dem Abstandsvektor 104 zum Fremdfahrzeug 2 und kann beispielsweise mittels eines Radarsensors 6A ermittelt werden. Der Einfallswinkel 105 und der gemessene kürzeste Abstand 104 bzw. deren zeitlicher Verlauf bestimmen maßgeblich die Gefährlichkeit und das Kollisionsrisiko des zeitlichen Ablaufs der Verkehrssituation.

Ferner wird die Bahnkurve 110 des eigenen Fahrzeugs 1 in allen drei Ebenen bestimmt. Die zurückgelegte und die bis zum vorausfahrenden Fahrzeug 2 projizierte Bahnkurve 110 des eigenen Fahrzeugs 1 werden zu exakten Einschätzungen der Fahrsituation und des Abstandes zum vorausfahrenden Fahrzeug 2 berechnet. Die Bahnkurve 110 kann beispielsweise mittels Radar 6, eines Neigungssensors und/oder GPS-Daten ermittelt werden.

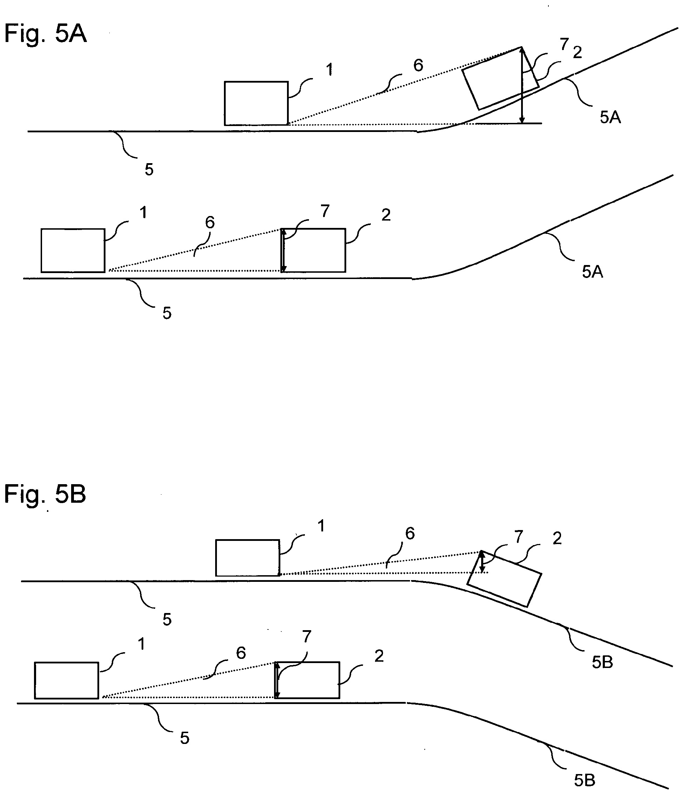

Weiterhin wird auch die Bahnkurve 111 des vorausfahrenden Fahrzeugs 2 berechnet. Dies kann beispielsweise mittels Radar 6 oder Lasersensorik erfolgen. So kann beispielsweise eine Kurvenfahrt aus dem Abstand zum vorausfahrenden Fremdfahrzeug 2 und der sich veränderten Breite der Hecksilhouette des Fremdfahrzeugs 2, die mittels Radar- oder Laserdaten erfasst wird, ermittelt werden. Dies ist ebenso für Fahrten bei Steigung oder Gefälle möglich. Dafür wird die Höhenveränderung der Hecksilhouette des vorausfahrenden Fremdfahrzeugs 2 bestimmt, was nachfolgend anhand der Fig. 5A und 5B erläutert wird. Statt die Bahnkurve 111 des Fremdfahrzeugs 2 selbst zu ermitteln, können diese Daten auch mittels Datenübertragung vom Fremdfahrzeug 2 oder von einer stationären Sendestation (nicht gezeigt) empfangen werden.

Ferner können der Straßentyp und die Bahnkurve 112 der Straße in drei Ebenen als Funktionsgröße ermittelt werden. Die ermittelte Bahnkurve 112 der Straße kann auch verwendet werden, um die anhand der aktuellen Fahrzeugposition die voraussichtlichen Bahnkurven 110, 111 des Fahrzeugs 1 und des Fremdfahrzeugs 2 zu bestimmen.

Der Straßentyp und die dreidimensionale Bahnkurve 112 der Straße kann anhand von folgenden Teilschritten erfolgen: Zuerst kann aus (zeitaktuellen) Navigationsdaten der aktuelle Straßentyp 112 bestimmt werden. Der aktuelle Straßentyp 112 kann folgende Werte umfassen: Bundesautobahn, Schnellstraße, Bundesstraße, Landesstraße, Nebenstraße, Stadtstraße - mehrspurig, Stadtstraße - einspurig, Hauptstraße, Nebenstraße, gegebenenfalls Baustelle. Nachfolgend wird die Anzahl der Fahrspuren in Fahrtrichtung unter Berücksichtigung des ermittelten Straßentyps 112 und/oder aus einem Bildvergleich mit Bildern aus einer Straßentyp-Datenbank ermittelt. Nachfolgend kann auf Basis des ermittelten Straßentyps 112 und der Anzahl der Fahrspuren die Fahrbahnbreite berechnet werden. So kann zur Ermittlung des rechten und gegebenenfalls linken Fahrbandrandes mittels Bildanalyse bestimmt werden, ob Fahrbahnmarkierungen vorhanden sind und/ oder durch Abtastung (beispielsweise mittels Ultraschallsensorik) der Untergrund erfasst werden.

Auf Basis des ermittelten Straßentyps 112, der Anzahl der Fahrspuren und der berechneten Fahrbahnbreite erfolgt dann eine Voraus-Abtastung der Fahrbahn 5, beispielsweise mittels Radar 6 oder Laser. Eine Vorausermittlung der Fahrbahnsteigung 5A kann dann durch Längenänderung des Abtaststrahls erfolgen. Ein Gefälle 5B der Straße kann dann aus Sensierung der Horizontverschiebung durch Bildvergleich unter Berücksichtigung des Fahrzeug-Nickens bzw. der Fahrzeug-Lage erfolgen. Wird ein Gefälle 5B erkannt, erfolgt eine zeitnahe Sensierung des Gefällegrades durch zumindest einen der folgenden Schritte: Sensierung der Achslastverschiebung (Einfederweg), Abnahme der Motorzugleistung (Zugkraftdiagramm), Veränderung der Länge des Fahrbahn-Abtaststrahls, Veränderung der Höhe (über NN) über einen längeren Sekundenzeitraum, oder Veränderung der GPS-Position. Mittels dieser berechneten Daten erfolgt dann eine Vorausberechnung der Bahnkurve 112 der Straße.

Wie in Fig. 1 weiter gezeigt, können weiterhin verschiedene Fahrzeugparameter 106 des eigenen Fahrzeugs 1 bestimmt werden, die für die Bestimmung des aktuellen Bremsverzögerungsvermögens des Fahrzeugs 1 verwendet werden können.

Beispielsweise kann der Fahrzeugtyp erfasst werden. Dem eigenen Fahrzeugtyp und der technischen Fahrzeugausführung liegt ein konstruktiv bedingtes Abbrems- (und Beschleunigungs-)vermögen zugrunde. Dieses bildet die Basis für weitere Berechnungen zur Längsregelung für die jeweilig vorliegende Fahrsituation. Der Fahrzeugtyp bzw. die technische Fahrzeugausführung ist typischerweise bereits im Fahrerassistenzsystem 100 voreingestellt, so dass dieser nicht neu bzw. laufend ermittelt werden muss.

Weitere mögliche aktuelle Fahrzeugparameter 106 basieren auf der aktuellen Beladung des Fahrzeugs 1 oder geben an, ob ein Anhänger angekoppelt ist. Der Beladungszustand kann als das aktuelle Gewicht des Fahrzeugs 1, als das aktuelle Gewicht eines Anhängers und/oder als das aktuelle Gewicht einer Beladung ermittelt werden. Das Gesamtgewicht verteilt sich auf die Achsen und kann mit deren Einfederungshöhe anhand der Federkennlinie der Federbeine errechnet werden.

Weitere aktuelle Fahrzeugparameter 106 beschreiben den Zustand der Reifen, und umfassen mehrere reifenspezifische Parameter des eigenen Fahrzeugs 1, wie den Reifenzustand und den Reifentyp mit definierten bzw. festgelegten Reifenklassen, z.B. Sommer-, Winter-, Ganzjahres- oder Off-Road-Reifen. Der Reifenzustand kann als Profiltiefe, beispielsweise in Prozent vom Neuzustand, erfasst werden. Dies gilt auch für den Fall eines nachgeschnittenen Reifens. Eine Verschleißzustandserkennung des Reifens ist aus der Differenz der aus dem Abrollumfang errechneten Fahrzeuggeschwindigkeit und der über GPS erfassten Geschwindigkeit möglich, so dass der Verschleißzustand der Reifen automatisch ermittelt wird und nicht manuell eingegeben werden muss.

Weitere mögliche aktuelle Fahrzeugparameter 106 spezifizieren den Zustand der Bremsanlage, beispielsweise basierend auf dem aktuellen Wartungszustand oder dem aktuellen Belastungszustand der Bremsanlage 116. Letzterer, insbesondere die situative und zeitaktuelle Erhitzung derart anfälliger Bremsanlagen 116, kann durch örtliche Temperatur- und Verschleißsensoren erkannt und entsprechend bei der Fahrzeug-Längsregelung berücksichtigt werden.

Eine weitere Klasse von Funktionsgrößen, die in die Fahrzeug-Längsregelung einfließen, betreffen Parameter, die die aktuelle Fahrbahn 5 beschreiben. So wird ein aktueller Fahrbahnzustand 107 ermittelt. Der Fahrbahnzustand 107 kann aus der unmittelbaren Erfassung von Fahrbahnparametern, wie Rauheit der Oberfläche, Welligkeit der Fahrbahn 5, Oberflächentemperatur an der Fahrbahn 5, etc. ermittelt werden, beispielsweise abgeleitet aus der Arbeit bzw. Bewegung der Feder- und Dämpfungselemente zur Stabilisierung der gefederten Fahrwerks- und Aufbaumassen des Fahrzeugs 1.

Zudem können zur genaueren Beurteilung von Höhenunterschieden des Querprofils der Fahrbahn 5 Ultraschallsensoren eingesetzt werden. Mittels entsprechender Sensordaten kann der Zustand der Fahrbahn 5 klassifiziert werden, beispielsweise mittels einer dreistufigen Klassifizierung der Fahrbahn 5 in "gut", "mittel" und "schlecht". Der ermittelte Fahrbahnzustand kann dann bei der Ermittlung des Bremsverzögerungsvermögens des eigenen Fahrzeugs 1 und des Fremdfahrzeugs 2 beispielsweise über einen Korrekturfaktor oder durch Verwendung entsprechender experimentell bestimmter Versuchsdaten berücksichtigt werden.

Ein weiterer Fahrbahnparameter ist der aktuelle Fahrbahnreibwert 108. Dieser resultiert einerseits aus der Fahrbahnoberfläche und andererseits aus dem Witterungseinfluss. Beide Einflussfaktoren können mit Radarsensoren, Kamera-Systemen (auch Infrarot) oder Laser-Scanner in logischer Verknüpfung mit einer Fahrbahnstrukturerkennung zur Durchführung von Bildvergleichen basierend auf einer Fahrbahndatenbank, und/oder Daten zur Helligkeit, Echoauswertung (Stärke und Streuung einer akustischen Reflexion) und der Außentemperatur gewonnen werden.

Die Datenauswertung führt zu einer Reibwerterkennung mit definierten bzw. festgelegten Reibwertklassen. Abhängig vom Reibwert $\mu F$ der Fahrbahnen 5 werden beispielsweise folgende Fahrbahnreibwertklassen gebildet werden: $\mu F\_1>0{,}8$; $\mu F\_2>0{,}5$ bis $0{,}8$; $\mu F\_3=0{,}2$ bis $0{,}5$; $\mu F\_4<0{,}2$.

Bezüglich weiterer Details zur Bestimmung von Reifenverschleiß, Fahrbahnzustand und Fahrbahnreibwert wird auf die Druckschrift DE 10 2011 108 110 A1 verwiesen.

Eine weitere Funktionsgröße, die in die Fahrzeug-Längsregelung eingeht, ist die Fahrzeugklasse 109 des Fremdfahrzeugs 2. Verschiedene Fahrzeugklassen 109 weisen in der Regel unterschiedliche Bremsverzögerungsvermögen auf. Durch die Bestimmung der Fahrzeugklasse 109 des Fremdfahrzeugs 2 kann der Sicherheitsabstand zum vorausfahrenden Fahrzeug 2 an die vorliegende Fahrzeugklasse 109 angepasst werden. So haben beispielsweise PKWs, aber auch Motorräder, im Vergleich zu LKWs oder Bussen in der Regel ein deutlich höheres Bremsverzögerungsvermögen.

Fig. 3 illustriert schematisch, wie die Klasse 109 des vorausfahrenden Fahrzeugs 2 anhand der Fahrzeugsilhouette bestimmt wird. Fig. 3 zeigt verschiedene mögliche Abmaße von Hecksilhouetten 4A bis 4G eines vorausfahrenden Fremdfahrzeugs 2. Die mit 4A bezeichnete Silhouette entspricht aufgrund der niedrigen Höhe einem Sportwagen, die Silhouette 4B mit vergleichbarer Breite, aber größerer Höhe einem PKW. Die Silhouette 4C mit schmaler Breite entspricht einem Motorrad; die Silhouette 4D mit ähnlicher Breite wie Sportwagen und PKW, aber größerer Höhe, entspricht einem SUV. Die Silhouette 4E entspricht einem Transporter, die Silhouette 4F einem kleinen LKW oder Stadtbus, während die größte Silhouette 4G einem LKW oder Reisebus entspricht.

Im Längsregler ist eine vorgegebene Anzahl von Fahrzeugklassen 109 hinterlegt. Mittels einer Radar- oder Kamerasensorik wird Höhe und Breite des Fremdfahrzeugs 2 bestimmt und damit die Fahrzeugklasse 109 des Fremdfahrzeugs 2 aus der vorgegebenen Anzahl von Fahrzeugklassen 109 bestimmt. Durch die Berechnung und Beachtung der 3-dimensionalen Bahnkurve und durch Berücksichtigung des Einfallswinkels 113 kann eine zusätzliche Geometriekorrektur sowohl der erfassten Breite und Höhe der rückwärtigen Fahrzeugsilhouette, als auch der Länge und Höhe der seitlichen Silhouette, beispielsweise bei Kurvenfahrt erfolgen. Dies wird erforderlich insbesondere dann, wenn die Längen-, Höhen und/oder Breitenanteile des Fremdfahrzeugs vom Sensor nicht ausreichend differenziert werden können.

Die beschriebenen Funktionsgrößen 103 bis 112 werden über eine Datenverbindung 113 an eine Reglereinheit 114 des Fahrerassistenzsystems zur Längsregelung 100 übertragen.

Auf Basis dieser Funktionsgrößen 103 bis 112 ermittelt die Reglereinheit 114 das aktuelle Bremsverzögerungsvermögen des Fahrzeugs 1 bzw. des Fremdfahrzeugs 2 anhand hinterlegter Reglertabellen 200. Auf Basis dieser Bremsverzögerungsvermögen wird dann der aktuell erforderliche Sicherheitsabstand wie in bekannten Längsregelungssystemen bestimmt. Ist eine Anpassung des Sicherheitsabstandes notwendig, steuert der Längsregler 114 durch ein Ausgangssignal 115 beispielsweise die Bremssteuerung 116 des Fahrzeugs 1.

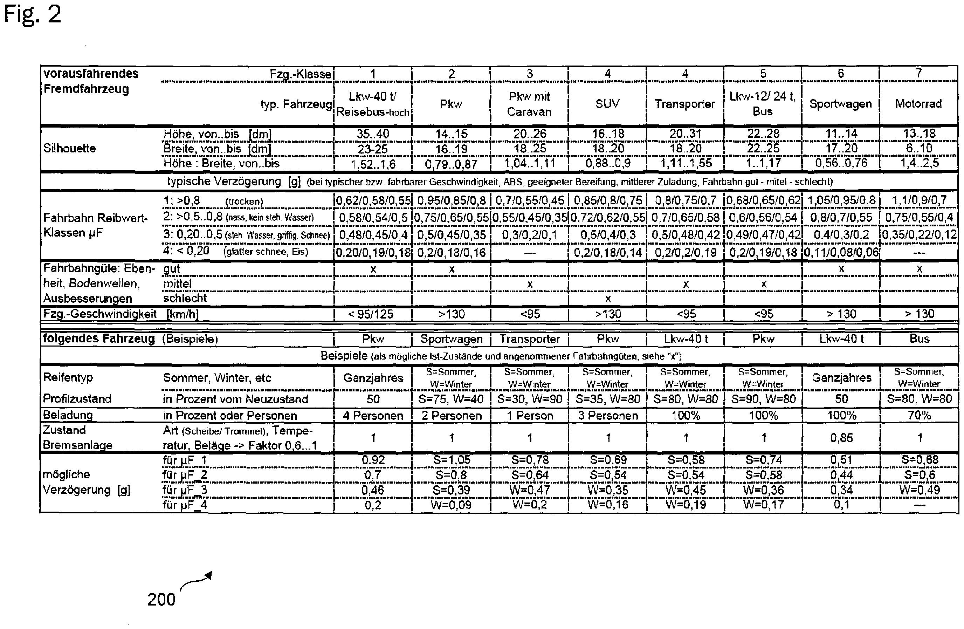

Im Fahrzeugregler 114 sind verschiedene Regelungstabellen 200 hinterlegt, mittels derer anhand der bestimmten Funktionsgrößen jeweils das aktuelle Bremsverzögerungsvermögen des Fahrzeugs 1 und des Fremdfahrzeugs 2 ermittelt wird, um auf dieser Basis einen aktuellen Sicherheitsabstand zu berechnen. Dies ist anhand von Fig. 2 näher erläutert.

Die in Fig. 2 gezeigte Tabelle 200 listet Werte für typische Bremsverzögerungsvermögen in Abhängigkeit von verschiedenen fahrbahn- und fahrzeugspezifischen Parametern 103 bis 112 auf.

Gemäß dem in Fig. 2 beschriebenen Ausführungsbeispiel wird für die Bestimmung des Bremsverzögerungsvermögens eines vorausfahrenden Fremdfahrzeugs 2 zwischen sieben verschiedenen Fahrzeugklassen 109 des Fremdfahrzeugs 2 unterschieden, die in der zweiten Zeile der Tabelle 200 aufgelistet sind. So fallen beispielsweise in eine erste Klasse LKWs bis 40 t bzw. hochgebaute Reisebusse. In der dritten Zeile sind die für die jeweilige Fahrzeugklasse 109 typischen Abmaße der Höhe und Breite der rückwärtigen Fahrzeugsilhouette aufgelistet. So liegt die typische Höhe derartiger LKWs und Reisebusse zwischen 35 und 40 Dezimeter und die Breite im Bereich von 23 bis 25 Dezimeter. In vergleichbarer Weise sind für die Fahrzeugklassen 2 bis 7 die Höhen- und Breitenabmaße von PKWs mit Caravan, SUVs, Transporter, LKW von 12 bis 24 t und Bussen, Sportwagen sowie Motorrädern ausgelistet.

In Tabelle 200 sind für verschiedene Fahrzeugklassen 109 typische Bremsverzögerungsvermögen aufgeführt, unter Annahme einer typischen Fahrgeschwindigkeit des Fremdfahrzeugs 2, Ausstattung mit ABS, geeigneter Bereifung und mittlerer Zuladung. Es wird hierbei insbesondere zwischen drei Fahrbahnzustandsklassen 107 "gut", "mittel" und "schlecht" unterschieden. Weiterhin wird zwischen vier verschiedenen Fahrbahnreibwert-klassen µF 108 unterschieden, die die unterschiedlichen Reibwertverhältnisse auf trockenen Straßen, nassen Straßen ohne stehendes Wasser, nassen Straßen mit stehendem Wasser bzw. mit griffigem Schnee oder Straßen mit glattem Schnee bzw. Eis berücksichtigen.

Jede Zeile in dem Feld "Fahrbahn-Reibwert-Klassen µF" der Tabelle 200 gibt das Bremsverzögerungsvermögen für eine der Reibwertklassen 1 bis 4 für die jeweilige Fahrzeugklasse 109 des Fremdfahrzeugs 1 bis 7; 2 an, wobei die Werte in jedem Tabellenfeld nochmals nach den Fahrbahnzuständen gut/mittel/schlecht unterschieden werden.

Durch die Bestimmung des aktuellen Fahrbahnzustands 107 und des aktuellen Fahrbahnreibwertes 108, wie im Zusammenhang mit Fig. 1 beschrieben, kann somit das aktuell zutreffende Bremsverzögerungsvermögen des vorausfahrenden Fremdfahrzeugs 2 ermittelt werden.

Wurde beispielsweise das vorausfahrende Fremdfahrzeug 2 als PKW der Fahrzeugklasse 2 erkannt, der aktuelle Fahrbahnzustand 107 als "gut" ermittelt und der aktuelle Fahrbahnreibwert µF 108 mit einem Wert > 0,8 (Fahrbahnreibwertklasse "1"), so entnimmt man aus dem zugehörigen Feld der Tabelle 200 den Wert 0,95 g für das Bremsverzögerungsvermögen des vorausfahrenden PKWs. Bei einem schlechten Fahrbahnzustand 107 (Fahrbahnzustandsklasse "schlecht"), wäre der Wert 0,8 g.

Bei schlechtem Fahrbahnzustand 107 und einer Fahrbahnreibwertklasse "3" würde sich das Bremsverzögerungsvermögen auf 0,35 g reduzieren. Handelt es sich bei diesen Straßenverhältnissen bei dem vorausfahrenden Fremdfahrzeug 2 dagegen um einen Transporter (Fahrzeugklasse 4), wäre das entsprechende Bremsverzögerungsvermögen 0,42 g.

Die Tabelle 200 verdeutlicht, dass die der Abstandsregelung zugrunde liegenden Bremsverzögerungsvermögen eine hohe Abhängigkeit von dem aktuellen Fahrbahnzustand 107 und dem aktuellen Fahrbahnreibwert 108 aufweisen, die sich während einer Fahrt laufend ändern können. Durch die fortwährende Bestimmung dieser Fahrbahnparameter kann somit die Abstandsregelung ständig an den aktuellen Fahrbahnzustand angepasst werden, so dass für die Abstandsregelung jeweils ein aktuell gültiges Bremsverzögerungsvermögen zugrunde liegt.

Wird bei der Bestimmung des Bremsverzögerungsvermögens des Fremdfahrzeugs 2 zusätzlich die Fahrzeugklasse 109 des vorausfahrenden Fahrzeugs 2 zugrunde gelegt, kann die Genauigkeit des bestimmten Bremsverzögerungsvermögens noch signifikant erhöht werden.

So weist ein Motorrad (Fahrzeugklasse 7, vgl. letzte Spalte in Tabelle 200) bei guten Fahrbahnzuständen 107 und einer aktuellen Fahrbahnreibklasse 108 von "1" (trockene Fahrbahn) ein im Vergleich zu einem schweren LKW der Fahrzeugklasse "1" besseres Bremsverzögerungsvermögen von 1,1 g im Vergleich zu 0,62 g für den LKW auf. Dagegen verschlechtert sich das Bremsverzögerungsvermögen des Motorrads bei schlechten Fahrbahnzuständen 107 und einer aktuellen Fahrbahnreibklasse 108 von "3" (stehendes Wasser oder griffiger Schnee) auf 0,12 g. Die des schweren LkWs verschlechtert sich dagegen nur auf 0,4 g, so dass das Bremsverzögerungsvermögen des LKWs bei diesen Straßenverhältnissen größer als das des Motorrads ist. Die gleichzeitige Berücksichtigung der aktuellen Fahrbahnparameter und der jeweiligen Fahrzeugklasse 109 des Fremdfahrzeugs 2 ermöglicht somit eine wesentlich genauere Abstandsregelung, die sich an die aktuelle Fahrumgebung anpassen kann.

Fig. 2 illustriert weiterhin die Abhängigkeit des Bremsverzögerungsvermögens des eigenen Fahrzeugs 1 in Abhängigkeit von fahrzeugspezifischen Parametern 106 und von fahrbahnspezifischen Parametern, wobei wiederum zwischen den verschiedenen Fahrzeugklassen 1 bis 7 unterschieden wird. Fig. 2 zeigt lediglich ausschnittsweise beispielhafte Werte für einzelne Parameterkombinationen.

Die Spalte "1" gibt exemplarisch für einen PKW mit den in Klammern angegebenen Werten für die fahrzeugspezifischen Parameter Fahrzeugklasse (PKW), angenommener Reifentyp (Ganzjahresreifen), Reifenzustand (Profilzustand von 50% vom Neuzustand), Beladungszustand (4 Personen), Zustand Bremsanlage (Faktor 1) das Bremsverzögerungsvermögen an. Hierbei sind nur Werte für einen angenommenen Fahrbahnzustand 107 mit dem Wert "gut" dargestellt, was durch die Auswahl "x" in der Zeile Fahrbahngüte ersichtlich ist. Für diese Parameter geben nun die unteren vier Zeilen des Felds "mögliche Verzögerung" das Bremsverzögerungsvermögen des Fahrzeug 1 für die vier verschiedenen Fahrbahnreibwert-Klassen 108 an.

Analog sind beispielsweise in Spalte "3" bzw. "Transporter" die jeweiligen Bremsverzögerungsvermögen für einen Transporter als vorausfahrendes Fremdfahrzeug 2 bei "mittlerer" Fahrbahngüte, Beladung mit einer Person und Bremsanlagenfaktor "1" angegeben, wobei die Werte für das Bremsverzögerungsvermögen getrennt für Sommer- und Winterreifen angegebenen sind (gekennzeichnet durch "S" und "W").

Ferner ist der Tabelle 200 zu entnehmen, dass im Falle eines PKWs, zu 100 % beladen ist, dessen Zustand der Bremsanlage mit einem Faktor "1" bewertet wurde und der mit Sommerreifen versehen ist, deren Profilzustand 90 % vom Neuzustand entspricht, das aktuelle Bremsverzögerungsvermögen für eine trockene Fahrbahn der Klasse "1" den Wert 0,74 aufweist.

Es wird darauf hingewiesen, dass Fig. 2 nur beispielhaft und ausschnittsweise die im Speicher des Fahrerassistenzsystems 100 hinterlegten Bremsverzögerungsvermögen für ein Fremdfahrzeug 2 und das eigene Fahrzeug 1 für die verschiedenen Wertbereiche der ermittelten Funktionsgrößen 103 bis 112 darstellt.

So ist in Fig. 2 nicht gezeigt, dass auch die dreidimensionalen Bahnkurven und Straßenverläufe zusätzlich in Form weiterer Tabellen oder eines Korrekturfaktors berücksichtigt werden können. Aus den Bahnkurven kann die Differenz der Steigungen der Fahrbahn 5A des Fahrzeugs 1 und Fremdfahrzeugs 2 ermittelt werden, woraus ein Korrekturfaktor aufgrund der zusätzlichen Hangtriebskraft abgeleitet werden kann, um den Wert für das Bremsverzögerungsvermögen von Fahrzeug 1 und Fremdfahrzeug 2 an die Fahrbahnsteigung 5A anzupassen.

Anhand der so bestimmten Bremsverzögerungsvermögen des eigenen Fahrzeugs 1 und des Fremdfahrzeugs 2 kann unter Berücksichtigung der aktuellen Fahrgeschwindigkeit und des Einfallswinkels 105 des Fremdfahrzeugs 2 ein genauer Sicherheitsabstand berechnet werden, auf den das Fahrerassistenzsystem 100 dann einregelt.

Der Einfluss der verschiedenen Funktionsgrößen 103 bis 112 auf das Bremsverzögerungsvermögen kann mittels Versuchsreihen für verschiedene Fahrzeugklassen 109 ermittelt werden. So wirkt sich beispielsweise eine Verschlechterung des Fahrbahnzustands 107 oder des Fahrbahnreibwerts 109 negativ auf das Bremsverzögerungsvermögen der Fahrzeuge aus.

Die ermittelten Bremsverzögerungswerte für verschiedene Kombinationen aus fahrbahn- und fahrzeugspezifischen Parametern 103 bis 112 werden dann als Regelungstabellen im Fahrzeug 1 hinterlegt, auf die Reglereinheit 114 zugreift.

Die folgenden Figuren erläutern beispielhaft die Fahrzeuglängsregelung für einige typische Fahrsituationen.

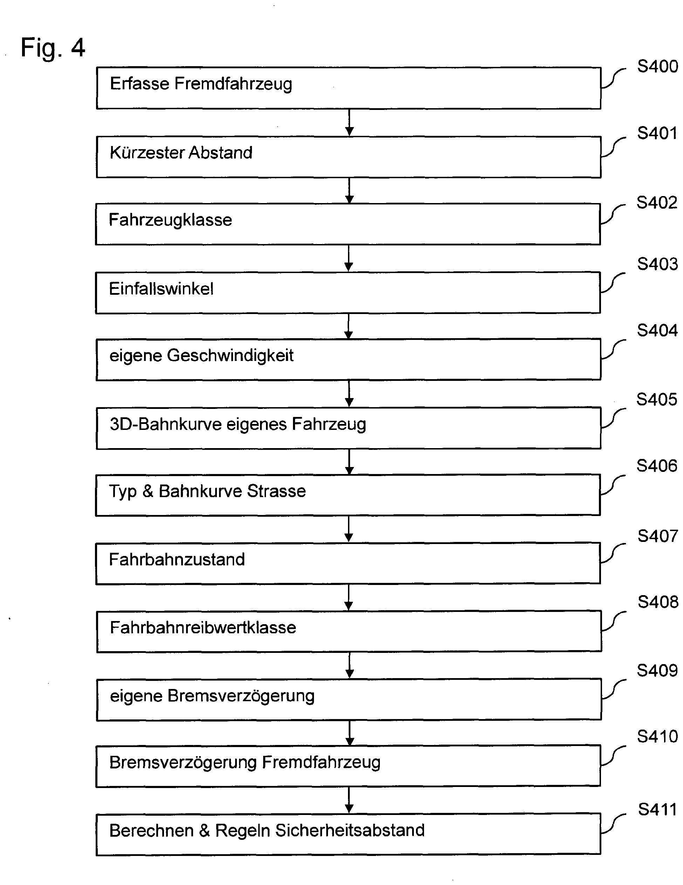

In Fig. 4 ist der Regelungsablauf für eine Fahrsituation beschrieben, bei der ein LKW-Sattelzug 1 einem Sportwagen 2 folgt (siehe auch Fig. 5). Die Fahrzeuge 1, 2 fahren auf einer Bundesautobahn bei trockenem Asphalt und Tageslicht. Die Fahrgeschwindigkeit des Sportwagens 2 beträgt 80 km/h, da der Fahrer einen Tausch-Motor einfährt, während der Sattelzug 1 mit einem zulässigen Gesamtgewicht von 40 t sich langsam mit 85 km/h dem vorausfahrenden Fahrzeug 2 annähert.

In einem Schritt S400 wird das vorausfahrende Fremdfahrzeug 2 (der Sportwagen) vom Radar 6 erfasst. Im nächsten Schritt S401 wird der Abstand 104 zwischen dem Sattelzug 1 und dem Sportwagen 2 ermittelt. Anschließend wird im Schritt S402 die Fahrzeugklasse 109 des vorausfahrenden Fahrzeugs 2 anhand des Abstandes 104, der Breite und Höhe des Objekts ermittelt. Die Breite und Höhe des Objekts wird mittels Radarreflexion an der rückseitigen Silhouette des vorausfahrenden Fahrzeugs 2 erfasst. Im vorliegenden Beispiel wird die Silhouette 4a erkannt und somit als Sportwagen 2 identifiziert.

Nachfolgend wird im Schritt S403 der Einfallswinkel 105 zum vorausfahrenden Sportwagen 2 aufgrund Abstand 104 und Fahrzeugbreite bestimmt. Im vorliegenden Ausführungsbeispiel ist der Einfallswinkel <5°, somit fährt das vorausfahrende Fahrzeug 2 in der gleichen Fahrspur. Im Schritt S404 wird die eigene Fahrgeschwindigkeit 103 abgefragt und anschließend im Schritt S405 die eigene dreidimensionale Bahnkurve 110 berechnet. Im angenommenen Beispiel findet eine Geradeausfahrt in der Ebene statt, so dass kein zusätzlicher Korrekturfaktor aufgrund einer steigungsbedingten Hangabtriebskraft berücksichtigt werden muss.

In Schritt S406 werden der aktuelle Straßentyp und die Bahnkurve 112 der Straße berechnet. Im vorliegenden Beispiel liegt eine Bundesautobahn und ein gerader Straßenverlauf vor. Anschließend wird im Schritt S407, wie zuvor erläutert, der Fahrbahnzustand berechnet. Im vorliegenden Beispiel liegt eine ebene gute Fahrbahn 5 vor. Im Schritt S408 wird die Fahrbahnreibwertklasse bestimmt: die Fahrbahnreibwertklasse $\mu F\_1 > 0,8$. Anhand dieser Daten wird aus den abgelegten Kennwerttabellen im Schritt S409 das eigene aktuelle Bremsverzögerungsvermögen ermittelt, was aufgrund der aktuellen Funktionsgrößen einem Wert von 0,62 g entspricht. Anschließend wird im Schritt S410 das Bremsverzögerungsvermögen für das Fremdfahrzeug 2 bestimmt, was aufgrund der vorliegenden Funktionsgrößen einem Wert von 1,05 g entspricht. Anhand der ermittelten Bremsverzögerungsvermögen wird anschließend im Schritt S411 der Sicherheitsabstand für die Fahrzeug-Längsregelung für eine Geschwindigkeit von 80 km/h des vorausfahrenden Fahrzeugs 2 berechnet.

Für die Berechnung der Sicherheitsabstände und für Vergleichszwecke werden weiterhin die fahrzeugtypische Schwelldauer der Bremsanlage 116 bis zum Anliegen der Bremsbeläge und bis zum weiteren Anstieg des Bremsdrucks bis zum Erreichen des Radblockierdrucks (Beginn der Antiblockierregelung) berücksichtigt. Typische Richtwerte für die Fahrzeugklassen PKW und Motorrad bzw. LKW bzw. Sattelzug sind 0,2 bzw. 0,3 bzw. 0,7 Sekunden. Weiterhin ist die Umsetzdauer des Fahrers vom Gas auf Bremspedal bzw. Griff zu berücksichtigen, wobei ein beispielhafter Richtwert bei 0,2 Sekunden, ist aber nicht reglerrelevant. Ein Richtwert des Sicherheitsabstands zum vorausfahrenden Fahrzeug 2 als Zeitlücke kann dann typischerweise $t_{Sich} = 1,8$ Sekunden betragen, ist aber auch nicht reglerrelevant sondern dient nur für Vergleichsrechnungen. Jedoch ist noch die Berechnungs- bzw. Zykluszeit des Reglers 114 zu berücksichtigen, die mit 400 ms angenommen wird.

Bei einem LKW-Sattelzug mit 40 t beträgt die Bremsenschwelldauer 0,7 s, zuzüglich der Berechnungszeit des Reglers 114 von 0,4 s ergibt sich somit eine Gesamtansprechdauer $t_{Break}$ für den Regler von 1,1 s. Aus der Formel

$$t_{Sich} = t_{BReak} + \frac{v_1}{2*a_1} - \frac{v_2^2}{2*a_2*v_1} \qquad (1)$$

$t_{RBreak}$ = Gesamtansprechdauer Fahrerassistenzsystem 100 und Bremse 116
$a_1$ = Mindestverzögerung Folgefahrzeug 2
$a_2$ = Verzögerung vorausfahrendes Fremdfahrzeug 2
$v_1$ = Geschwindigkeit 103 Folgefahrzeug 2
$v_2$ = Geschwindigkeit vorausfahrendes Fremdfahrzeug 2

errechnet sich der Sicherheitsabstand von 41 m entsprechend einer Zeitlücke $t_{Sich} = 1,85$ s. Das Fahrerassistenzsystem 100 regelt daraufhin die Folgefahrt auf dem errechneten Sicherheitsabstand bei gleichen Geschwindigkeiten ein.

Fig. 5A illustriert, wie die Bahnkurve 111 des vorausfahrenden Fahrzeugs 2 anhand der sich verändernden Hecksilhouette des Fahrzeugs 2 ermittelt werden kann. Die Hecksilhouette des vorausfahrenden Fremdfahrzeugs 2 wird vom Fahrzeug 1 mittels eines Radarstrahls 6 erfasst. Die erfasste Höhe 7 der Hecksilhouette des Fremdfahrzeugs 2 verändert sich in Abhängigkeit von Steigung 5A und Gefälle 5B der Fahrbahn 5.

Beispielsweise wird die erfasste Höhe der Hecksilhouette 7 im Vergleich zu der Situation, wo sich beide Fahrzeuge 1, 2 in einer Ebene befinden, bei Einfahrt des vorausfahrenden Fremdfahrzeugs 2 in eine Steigung scheinbar größer, so dass die steigende Bahnkurve 111 des vorausfahrenden Fremdfahrzeugs 2 vom Folgefahrzeug 1 durch die sich vergrößernde Hecksilhouette erfasst werden kann. In ähnlicher Weise wird die erfassbare Höhe der Hecksilhouette 7 des vorausfahrenden Fremdfahrzeugs 2 kleiner, wenn das vorausfahrende Fremdfahrzeug 2 in ein Gefälle einfährt. Dies ist in Fig. 5B illustriert. Somit können positive und negative Steigungen der Bahnkurve 111 des vorausfahrenden Fahrzeugs 2 ermittelt werden. Aus der Grad der erfassten Höhenänderungen der Hecksilhouette kann der Grad der Steigung abgeleitet werden. In vergleichbarer Weise (nicht gezeigt) können Rechts- oder Linkskurven 111 der Fahrbahn des vorausfahrenden Fremdfahrzeugs 2 durch die sich verändernde Breite der Hecksilhouette des Fremdfahrzeugs 2 erfasst werden.

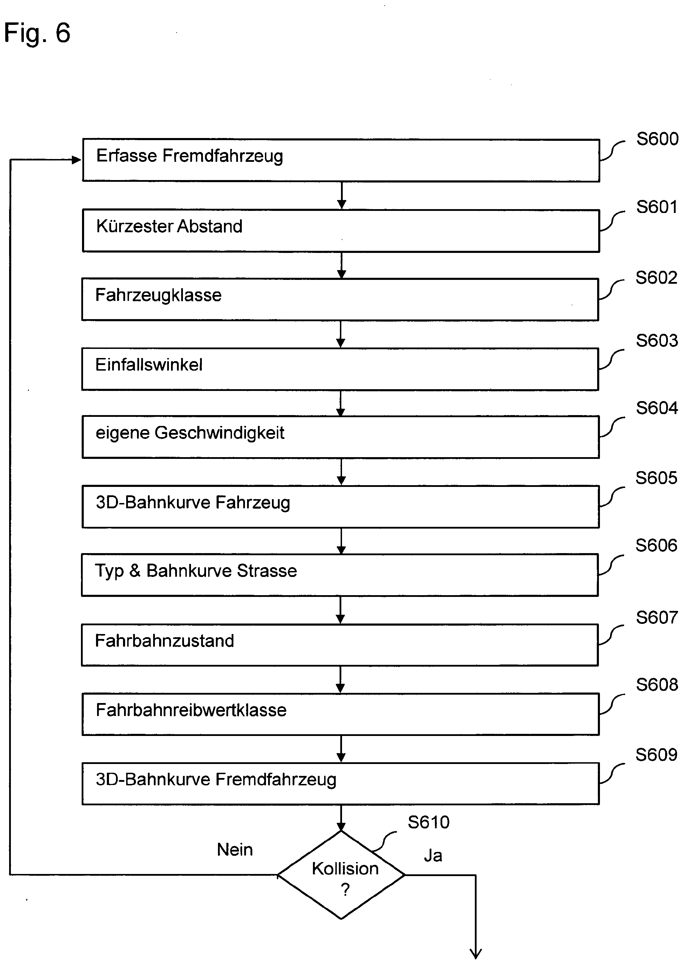

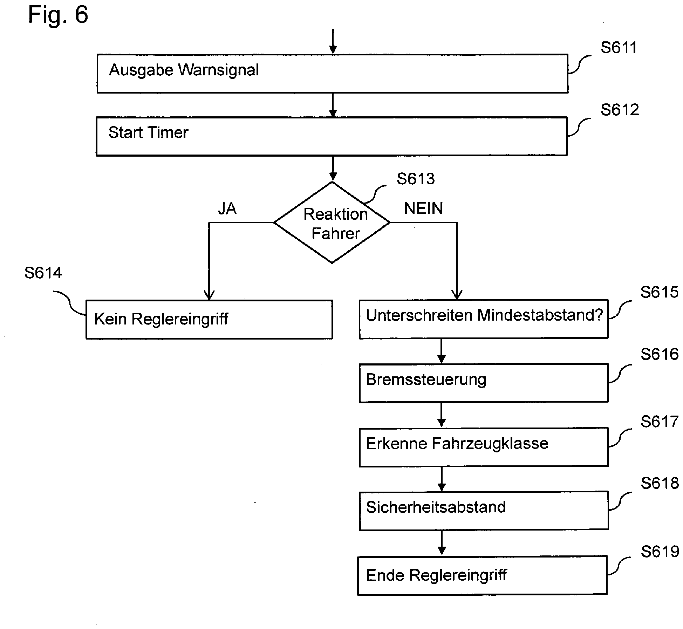

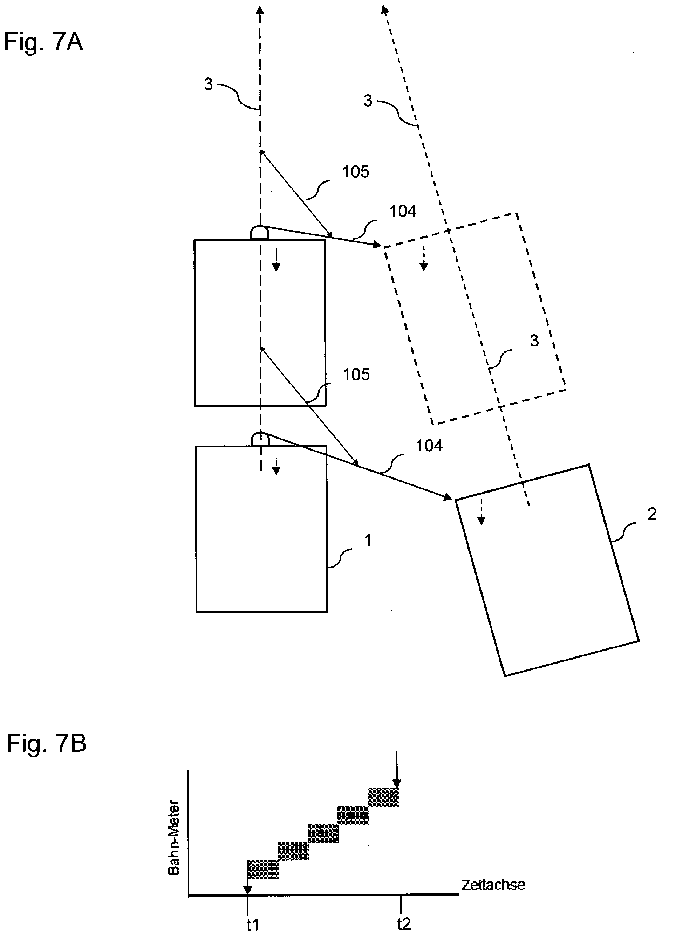

Fig. 6 illustriert den Regelungsablauf für eine weitere typische Fahrsituation. In diesem Beispiel fährt ein LKW 1 auf der rechten Spur einer Bundesautobahn mit einer Geschwindigkeit von 75 km/h bei starkem Regen und schlechter Sicht. Ein Fremdfahrzeug 2 in Form eines LKWs nähert sich von hinten rechts, wie in Fig. 7A illustriert, zum Einfädeln mit 85 km/h und gerät somit in den Radar-Einfallswinkel von LKW 1.

In Schritt S600 wird das sich von hinten seitlich nähernde Fremdfahrzeug 2 vom Radar 6 erfasst. In Schritt S601 wird der kürzeste Abstand 104 zum Fremdfahrzeug 2 gemessen. Daraufhin wird in Schritt S602 die Fahrzeugklasse 109 des sich nähernden Fahrzeugs 2 aufgrund des Abstands und der Höhe bestimmt und als LKW oder Bus identifiziert. Im Schritt S603 wird der Einfallswinkel 105 aufgrund des Abstands 104 von der linken vorderen Fahrzeugbegrenzung ermittelt, der im vorliegenden Beispiel einen Wert von 150° aufweist. Anschließend wird im Schritt S604 die eigene Fahrgeschwindigkeit 103 erfasst, die in der Regel ständig bekannt vorliegt. Im Schritt S605 wird die eigene dreidimensionale Bahnkurve 110 berechnet, die im folgenden Beispiel einer Geradeausfahrt in der Ebene entspricht. Anschließend werden in Schritt S606 der Straßentyp und die Bahnkurve 112 der Straße berechnet. Gemäß der angenommenen Fahrsituation wird der Straßentyp 112 als Bundesautobahn ermittelt. Anschließend wird im Schritt S607 der Fahrbahnzustand 107 berechnet, wobei gemäß der angenommenen Fahrsituation eine gute Fahrbahn 5 mit ebenem Verlauf vorliegt.

Anschließend wird in Schritt S608 die Fahrbahnreibwertklasse 108 bestimmt, vorliegend µF_2 mit Werten von 0,5 bis 0,8. Im folgenden Schritt S609 wird die dreidimensionale Bahnkurve 111 des LKWs 2 berechnet. Im Schritt S610 wird in Abhängigkeit der ermittelten Bahnkurven 110, 111 bestimmt, ob eine Zeitdauer oder ein Abstand bis zu einer möglichen seitlichen Kollision zwischen Fahrzeug 1 und dem sich seitlich nähernden Fremdfahrzeug 2 einen vorbestimmten Schwellwert unterschritten hat. Falls NEIN, besteht keine unmittelbare Kollisionsgefahr und der Regelungsablauf geht zurück zu Schritt S600, um die Gefahrensituation weiter zu beobachten. Falls jedoch eine Zeitdauer oder ein Abstand bis zu einer möglichen seitlichen Kollision zwischen dem eigenen Fahrzeug 1 und dem Fremdfahrzeug 2 einen vorbestimmten Schwellwert unterschritten hat, d.h. eine Kollision bevorstehen könnte, wird ein Warnsignal in Schritt S611 ausgegeben. Im vorliegenden Beispiel wurde die Gefahr einer seitlichen Kollision oder des Schneidens in 3 bis 4 Sekunden ermittelt und somit in Schritt S611 eine akustische Warnung aus dem Lautsprecher an den Fahrer ausgegeben.

Nachfolgend wird im Schritt S613 bestimmt, ob der Fahrer während einer vorbestimmten Reaktionsphase einen Lenk- und/oder Bremsvorgang oder eine Geschwindigkeitsänderung oder Änderung des Fahrpedals ausführt. Hierfür kann dem Fahrer beispielsweise mittels eines Timers eine Reaktionszeit von 2 Sekunden eingeräumt werden, um dem Fahrer selbst die Möglichkeit zu geben, lenkend auszuweichen oder abzubremsen. Derartige Gefahrensituationen können durch eine Querregelung des Fahrers in der Regel am besten gelöst werden, so dass vor Eingriff der Längsregelung vorteilhafterweise dem Fahrer eine Reaktionszeit eingeräumt wird. Fig. 7B illustriert die dem Fahrer in Schritt S612 eingeräumte Reaktionsphase zwischen dem Zeitpunkt t1 und t2. Die Länge der Reaktionsphase kann in Abhängigkeit von der bestimmten Zeitdauer des bestimmten Abstands bis zu einer möglichen seitlichen Kollision bestimmt werden.

Wird eine diesbezügliche Reaktion des Fahrers in Schritt S613 erkannt, erfolgt kein Reglereingriff S614. Die Fahrzeug-Längsregelung bleibt aber grundsätzlich in Betrieb, um die Verkehrssituation weiter zu erfassen. Falls der Fahrer innerhalb der vorbestimmten Reaktionszeit nicht reagiert und im Schritt S615 erkannt wird, dass ein vorbestimmter Sicherheits-Mindestabstand unterschritten wird, speist die Fahrzeug-Längsregelung den maximalen Bremsdruck in Schritt S616 ein, zusätzlich wird die ABS-Regelung gestartet, da der Reibwert bei 0,55 liegt.

Im Schritt S617 wird aufgrund der nahen Silhouette des sich seitlich annähernden Fremdfahrzeugs 2 das Fremdfahrzeug 2 als LKW erkannt und klassifiziert. In Schritt S618 erfolgt die Abbremsung solange, bis der Sicherheitsabstand zum klassifizierten LKW 2 erreicht ist. Nach Erreichen des erforderlichen Sicherheitsabstandes folgt in Schritt S619 ein Ende der Längsregelung, da die unmittelbare seitliche Kollisionsgefahr nicht mehr besteht und der Sicherheitsabstand erreicht ist.

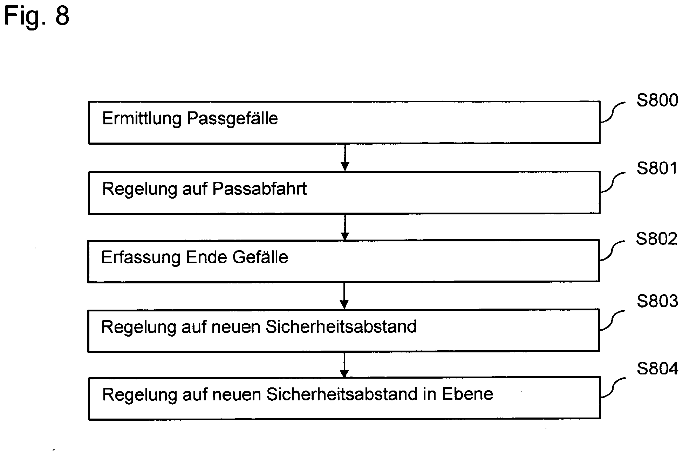

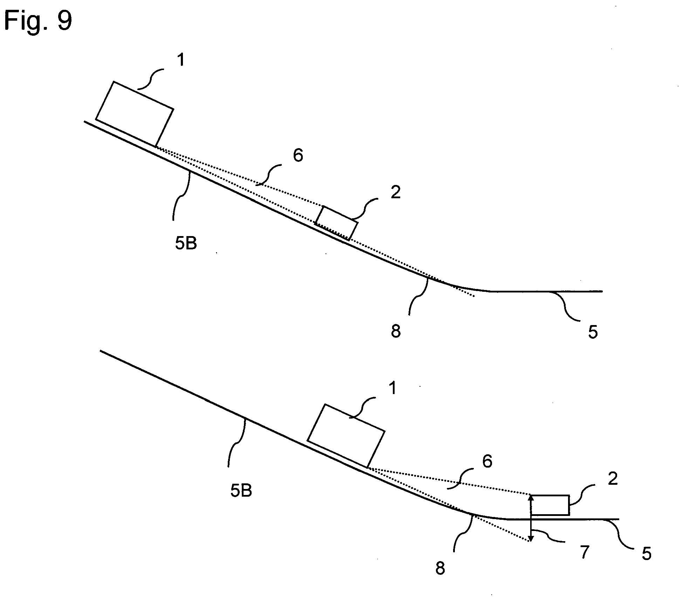

Fig. 8 und 9 illustrieren die Längsregelung für eine weitere typische Fahrsituation. Wie in Fig. 9 dargestellt, folgt im vorliegenden Beispiel ein LKW-Fahrzeug 1 einem vorausfahrenden PKW-Fremdfahrzeug 2 entlang einer Fahrbahn 5 auf einem Abschnitt 5b mit Gefälle. Im vorliegenden Beispiel fährt der LKW 1 mit einer Geschwindigkeit von 50 km/h bei Schneefall und einer schneebedeckten Fahrbahn und schlechter Sicht. Wie im unteren Bild auf Fig. 9 dargestellt, fährt der vorausfahrende PKW 2 anschließend in eine Ebene ein. Aufgrund der Einfahrt des vorausfahrenden PKWs 2 in eine Ebene verbessert sich dessen Bremsverzögerungsvermögen durch Wegfall der Hangabtriebskraft, so dass der Sicherheitsabstand vom nachfolgenden LKW 1, der sich noch auf dem Gefälle befindet, zu diesem PKW 2 vergrößert werden muss.

Im Schritt S800 wird das Passgefälle der aktuellen Fahrbahn 5 ermittelt. Das Passgefälle wurde aus den dreidimensionalen Straßenbahnkurven 112 und/ oder aus den dreidimensionalen Bahnkurven 110, 111 des Fahrzeugs 1 bzw. des Fremdfahrzeugs 2 ermittelt. Im Schritt S801 wird der aktuelle Sicherheitsabstand auf Passabfahrt geregelt unter Berücksichtigung der Bremsverzögerungsvermögen des Fahrzeugs 1 und des Fremdfahrzeugs 2, die wie zuvor anhand der verschiedenen Funktionsgrößen 103 bis 112 ermittelt wurden. In Schritt S802 wird ein Ende des Gefälles durch Horizontverschiebung und Objektveränderung erkannt. Die Hecksilhouette und die sichtbarer Fahrzeugfront ergeben aus Sicht des LKWs 1 eine größere Objekthöhe 7. Aus dem ermittelten Passgefälle ist somit die Steigung bzw. das Gefälle der eigenen Bahnkurve 110 bekannt. Die Steigung bzw. das Gefälle der Bahnkurve 111 des vorausfahrenden Fahrzeugs wurde über die Horizontverschiebung und die erfasste Objektveränderung ermittelt.

Aus den unterschiedlichen Steigungen der Fahrbahn des eigenen Fahrzeugs 1 im Vergleich zum Fremdfahrzeug 2 ergibt sich somit ein Korrekturbedarf für die Längsregelung. In Schritt S803 bremst die Fahrzeug-Längsregelung den LKW 1 so lange ab, bis der Abstand zum vorausfahrenden PKW 2 entsprechend dem verlängerten Bremsweg aufgrund der bekannten Hangabtriebskraft angepasst ist. In Schritt S804 erfolgt eine Neuanpassung des Sicherheitsabstandes nach dem Einfahren des LKWs 1 in die Ebene.

Die einzelnen Merkmale der Erfindung sind selbstverständlich nicht auf die beschriebenen Kombinationen von Merkmalen im Rahmen der vorgestellten Ausführungsbeispiele beschränkt und können in Abhängigkeit vorhandener Fahrzeugsensorik auch in anderen Kombinationen eingesetzt werden. Dies trifft insbesondere auf die Kombinationen der in Fig. 1 dargestellten Funktionsgrößen zu, die unterschiedlich kombiniert werden können. So können beispielsweise nur die voraussichtliche Bahnkurve des Fahrzeugs und/oder die voraussichtliche Bahnkurve des vorausfahrenden Fremdfahrzeugs in die Längsregelung einfließen.

Ferner ist es vorteilhaft, aber nicht unbedingt notwendig, weitere fahrbahnspezifische oder fahrzeugspezifische Parameter oder die Bestimmung der Fahrzeugklasse des vorausfahrenden Fahrzeugs zu berechnen und bei der Längsregelung zu berücksichtigen. Je nach gewählter Ausführungsform werden dann für die ermittelten Funktionsgrößen im Fahrerassistenzsystem 100 die entsprechenden angepassten Regelungstabellen hinterlegt. Ferner können selbstverständlich nach Bedarf und erforderlicher Genauigkeit die Anzahl der verwendeten Klassen für die einzelnen Parameter, wie Fahrzeugklasse, Fahrbahnzustandsklasse, Fahrbahnreibwertklasse etc. angepasst werden.

**Bezugszeichenliste**

| | |
|---|---|
| 1 | Fahrzeug |
| 2 | Fremdfahrzeug |
| 3 | Fahrtrichtung |
| 4A | Sportwagensilhouette |
| 4B | PKW-Silhouette |
| 4C | Motorrad-Silhouette |
| 4D | SUV-Silhouette |
| 4F | kleiner LKW- oder Stadtbus-Silhouette |
| 4G | LKW- oder Reisebus-Silhouette |
| 5 | Fahrbahn |
| 5A | Fahrbahn mit Steigung |
| 5B | Fahrbahn mit Gefälle |
| 6 | Radarstrahl |
| 6A | Radarsensor |
| 7 | Höhe Hecksilhouette |
| 100 | Fahrerassistenzsystem zur Fahrzeug-Längsregelung |
| 101 | Sensoren und Daten |
| 102 | Datenverbindung |
| 103 | Geschwindigkeit |
| 104 | kürzester Abstand zum Fremdfahrzeug |
| 105 | Einfallswinkel |
| 106 | Fahrzeugparameter |
| 107 | aktueller Fahrbahnzustand |
| 108 | aktueller Fahrbahnreibwert |
| 109 | Fahrzeugklasse Fremdfahrzeug |
| 110 | 3D-Bahnkurve Fahrzeug |
| 111 | 3D-Bahnkurve Fremdfahrzeug |
| 112 | Straßentyp und 3D-Bahnkurve Fahrbahn |
| 113 | Datenleitung |
| 114 | Reglereinheit |
| 115 | Steuerleitung |
| 116 | Bremsanlage |
| 200 | Tabelle mit fahrbahnspezifischen und fahrzeugspezifischen Bremsverzögerungsvermögen |

**Patentansprüche**

1. Betriebsverfahren für ein Fahrerassistenzsystem (100) zur Fahrzeug-Längsregelung eines Fahrzeugs (1) bezüglich eines Fremdfahrzeugs (2), vorzugsweise zur Geschwindigkeits- und/oder Abstandsregelung, wobei in die Fahrzeug-Längsregelung eine voraussichtliche Bahnkurve (110) des Fahrzeugs (1) und/oder eine voraussichtliche Bahnkurve (111) eines vorausfahrenden Fremdfahrzeugs (2) einfließt, umfassend den Schritt: Bestimmen einer Steigung der voraussichtlichen Bahnkurve (110) des Fahrzeugs (1) und einer Steigung der voraussichtlichen Bahnkurve (111) des vorausfahrenden Fremdfahrzeugs (2), wobei die bestimmten Steigungen in die Fahrzeug-Längsregelung einfließen,

   **gekennzeichnet durch**
   ein Anpassen eines von der Längsregelung einzuhaltenden Sicherheitsabstandes zwischen dem Fahrzeug (1) und dem Fremdfahrzeug (2) in Abhängigkeit der Differenz der beiden Steigungen, derart, dass der Abstand zwischen dem Fahrzeug (1) und dem vorausfahrenden Fremdfahrzeug (2) vergrößert wird, wenn die Steigung der Bahnkurve (111) des vorausfahrenden Fremdfahrzeugs (2) größer ist als die Steigung der Bahnkurve (110) des Fahrzeugs (1) und der Abstand zwischen dem Fahrzeug (1) und dem vorausfahrenden Fremdfahrzeug (2) verkleinert wird, wenn die Steigung der Bahnkurve (111) des vorausfahrenden Fremdfahrzeugs (2) kleiner ist als die Steigung der Bahnkurve (110) des Fahrzeugs (1).

2. Betriebsverfahren nach Anspruch 1, wobei die voraussichtliche Bahnkurve (110, 111) des Fahrzeugs (1) und des vorausfahrenden Fremdfahrzeugs (2) als 3-dimensionale voraussichtliche Bahnkurven (110, 111) bestimmt werden.

3. Betriebsverfahren nach einem der Ansprüche 1 oder 2, wobei die 3-dimensionale Bahnkurve (110) des Fahrzeugs (1) als eine zurückgelegte und bis zum vorausfahrenden Fahrzeug (2) projizierte Bahnkurve anhand des Abstandes (104) zum vorausfahrenden Fremdfahrzeug (2) mittels Radar, GPS-Daten und/oder Neigungssensoren ermittelt wird.

4. Betriebsverfahren nach einem der vorhergehenden Ansprüche 2 oder 3, wobei die 3-dimensionale Bahnkurve (111) des vorausfahrenden Fremdfahrzeugs (2) in Abhängigkeit einer sich verändernden Breite und/oder Höhe einer Hecksilhouette (4A-4G) des Fremdfahrzeugs (2) ermittelt wird.

5. Betriebsverfahren nach Anspruch 4, wobei die 3-dimensionale Bahnkurve (111) des vorausfahrenden Fremdfahrzeugs (2) in Abhängigkeit einer seitliche Silhouette und Fahrzeuglänge ermittelt wird.

6. Betriebsverfahren nach einem der vorhergehenden Ansprüche 2 bis 5, weiter umfassend die Schritte: falls die 3-dimensionale Bahnkurve (111) des Fremdfahrzeugs (2) eine gekrümmte Bahnkurve ist, geometrisches Korrigieren einer projizierten, aus vier Eckpunkten bestehende Silhouette des Fremdfahrzeugs (2) in Abhängigkeit von der 3-dimensionalen Bahnkurve, und Bestimmen einer Fahrzeugklasse des Fremdfahrzeugs in Abhängigkeit der korrigierten Silhouette.

7. Betriebsverfahren nach einem der vorhergehenden Ansprüche, weiter umfassend den Schritt: Bestimmen eines Straßentyps und einer 3-dimensionalen Bahnkurve (112) der Straße, wobei der bestimmte Straßentyp und die 3-dimensionale Bahnkurve (112) der Straße in die Fahrzeuglängsregelung einfließt.

8. Betriebsverfahren nach einem der vorhergehenden Ansprüche, weiter umfassend die Schritte: Bestimmen zumindest eines Fahrbahnzustandes (107), eines Fahrbahnreibwertes (108), einer Fahrzeugklasse (109) des Fremdfahrzeugs (2), eines Fahrzeugbeladungszustands, eines Zustands der Fahrzeugbremsanlage und/oder eines reifenspezifischen Parameters des Fahrzeugs (1), wobei zumindest einer dieser Parameter in die Längsregelung einfließt.

9. Fahrerassistenzsystem (100) zur Fahrzeug-Längsregelung eines Fahrzeugs (1) bezüglich eines Fremdfahrzeugs (2), vorzugsweise zur Geschwindigkeits- und/oder Abstandsregelung, das eingerichtet ist, ein Betriebsverfahren nach einem der vorhergehenden Ansprüche durchzuführen, wobei das Fahrerassistenzsystem (100) Folgendes umfasst:

   - eine Bereitstellungseinrichtung (110, 111), die zum Bereitstellen zumindest einer voraussichtlichen Bahnkurve (110) des Fahrzeugs (1) und/oder einer voraussichtlichen Bahnkurve (111) des vorausfahrenden Fremdfahrzeugs (2) ausgeführt ist; und
   - eine Regelungseinrichtung (114), die zum Durchführen der Fahrzeug-Längsregelung in Abhängigkeit von zumindest der voraussichtlichen Bahnkurve (110) des Fahrzeugs (1) und/oder der voraussichtlichen Bahnkurve (111) des vorausfahrenden Fremdfahrzeugs (2) ausgeführt ist.

10. Nutzfahrzeug, vorzugsweise Lastwagen oder Omnibus, mit einem Fahrerassistenzsystem (100) nach Anspruch 9.

**Claims**

1. Operating method for a driver assistance system (100) for the longitudinal control of a vehicle (1) with respect to another vehicle (2), preferably for controlling the speed and/or inter-vehicle distance, wherein an anticipated trajectory (110) of the vehicle (1) and/or an anticipated trajectory (111) of another vehicle (2) travelling ahead are included in the longitudinal control of the vehicle, comprising the step:

   determining a gradient of the anticipated trajectory (110) of the vehicle (1) and a gradient of the anticipated trajectory (111) of the other vehicle (2) travelling ahead, wherein the determined gradients are included in the longitudinal control of the vehicle,
   **characterized by**
   adapting a safety distance, to be maintained by the longitudinal control, between the vehicle (1) and the other vehicle (2) as a function of the difference between the two gradients in such a way that the distance between the vehicle (1) and the other vehicle (2) travelling ahead is increased if the gradient of the trajectory (111) of the other vehicle (2) travelling ahead is greater than the gradient of the trajectory (110) of the vehicle (1), and the distance between the vehicle (1) and the other vehicle (2) travelling ahead is decreased if the gradient of the trajectory (111) of the other vehicle (2) travelling ahead is smaller than the gradient of the trajectory (110) of the vehicle (1).

2. Operating method according to Claim 1, wherein the anticipated trajectory (110, 111) of the vehicle (1) and of the other vehicle (2) travelling ahead are determined as 3-dimensional anticipated trajectories (110, 111).

3. Operating method according to one of Claims 1 and 2, wherein the 3-dimensional trajectory (110) of the vehicle (1) is determined as a trajectory travelled along and projected to the vehicle (2) travelling ahead, on the basis of the distance (104) from the other vehicle (2) travelling ahead, by means of radar, GPS data and/or inclination sensors.

4. Operating method according to one of the preceding Claims 2 and 3, wherein the 3-dimensional trajectory (111) of the other vehicle (2) travelling ahead is determined as a function of a changing width and/or height of a tail-end silhouette (4A-4G) of the other vehicle (2).

5. Operating method according to Claim 4, wherein the 3-dimensional trajectory (111) of the other vehicle (2) travelling ahead is determined as a function of a lateral silhouette and vehicle length.

6. Operating method according to one of the preceding Claims 2 to 5, also comprising the steps: if the 3-dimensional trajectory (111) of the other vehicle (2) is a curved trajectory, geometric correction of a projected silhouette, consisting of four vertices, of the other vehicle (2) as a function of the 3-dimensional trajectory, and determining a vehicle class of the other vehicle as a function of the corrected silhouette.

7. Operating method according to one of the preceding claims, also comprising the step: determining a road type and a 3-dimensional trajectory (112) of the road, wherein the determined road type and the 3-dimensional trajectory (112) of the road are included in the longitudinal control of the vehicle.

8. Operating method according to one of the preceding claims, also comprising the steps: determining at least one vehicle state (107), one coefficient of friction (108) of the roadway, one vehicle class (109) of the other vehicle (2), one state of load of the vehicle, one state of the brake system of the vehicle and/or one tyre-specific parameter of the vehicle (1), wherein at least one of these parameters is included in the longitudinal control.

9. Driver assistance system (100) for the longitudinal control of a vehicle (1) with respect to another vehicle (2), preferably for controlling the speed and/or inter-vehicle distance, which driver assistance system (100) is configured to carry out an operating method according to one of the preceding claims, wherein the driver assistance system (100) comprises the following:

   - a supply device (110, 111) which is designed to supply at least one anticipated trajectory (110) of the vehicle (1) and/or one anticipated trajectory (111) of the other vehicle (2) travelling ahead; and
- a control device (114) which is designed to carry out the longitudinal control of the vehicle as a function of at least the anticipated trajectory (110) of the vehicle (1) and/or the anticipated trajectory (111) of the other vehicle (2) travelling ahead.

10. Utility vehicle, preferably lorry or bus, having a driver assistance system (100) according to Claim 9.


**Revendications**

1. Procédé de fonctionnement pour un système d'assistance au conducteur (100) destiné à la régulation longitudinale de véhicule d'un véhicule (1) par rapport à un véhicule tiers (2), de préférence destiné à la régulation de la vitesse et/ou de la distance, une trajectoire probable (110) du véhicule (1) et/ou une trajectoire probable (111) d'un véhicule tiers (2) qui précède intervenant dans la régulation longitudinale de véhicule, comprenant les étapes suivantes :

   détermination d'une pente de la trajectoire probable (110) du véhicule (1) et d'une pente de la trajectoire probable (111) d'un véhicule tiers (2) qui précède, les pentes déterminées intervenant dans la régulation longitudinale de véhicule,
   **caractérisé par**
   une adaptation d'une distance de sécurité à respecter par la régulation longitudinale entre le véhicule (1) et le véhicule tiers (2) en fonction de la différence entre les deux pentes, de telle sorte que la distance entre le véhicule (1) et le véhicule tiers (2) qui précède est augmentée lorsque la pente de la trajectoire (111) du véhicule tiers (2) qui précède est supérieure à la pente de la trajectoire (110) du véhicule (1) et la distance entre le véhicule (1) et le véhicule tiers (2) qui précède est réduite lorsque la pente de la trajectoire (111) du véhicule tiers (2) qui précède est inférieure à la pente de la trajectoire (110) du véhicule (1).

2. Procédé de fonctionnement selon la revendication 1, les trajectoires probables (110, 111) du véhicule (1) et du véhicule tiers (2) qui précède étant définies sous la forme de trajectoires (110, 111), probables tridimensionnelles.

3. Procédé de fonctionnement selon l'une des revendications 1 ou 2, la trajectoire (110) tridimensionnelle du véhicule (1) étant déterminée au moyen d'un radar, de données de GPS et/ou de capteurs d'inclinaison sous la forme d'une trajectoire parcourue et projetée jusqu'au véhicule tiers (2) qui précède à l'aide de la distance (104) par rapport au véhicule tiers (2) qui précède.

4. Procédé de fonctionnement selon l'une des revendications 2 ou 3, la trajectoire (111) tridimensionnelle du véhicule tiers (2) qui précède étant déterminée en fonction d'une largeur et/ou hauteur d'une silhouette arrière (4A-4G) qui varie du véhicule tiers (2) .

5. Procédé de fonctionnement selon la revendication 4, la trajectoire (111) tridimensionnelle du véhicule tiers (2) qui précède étant déterminée en fonction d'une silhouette latérale et de la longueur du véhicule.

6. Procédé de fonctionnement selon l'une des revendications 2 à 5, comprenant en outre les étapes suivantes : si la trajectoire (111) tridimensionnelle du véhicule tiers (2) est une trajectoire curviligne, correction géométrique projetée d'une silhouette du véhicule tiers (2), composée de quatre coins, en fonction de la trajectoire tridimensionnelle et définition d'une catégorie de véhicule du véhicule tiers en fonction de la silhouette corrigée.

7. Procédé de fonctionnement selon l'une des revendications précédentes, comprenant en outre l'étape suivante : définition d'un type de route et d'une trajectoire (112) tridimensionnelle de la route, le type de route défini et la trajectoire (112) tridimensionnelle de la route intervenant dans la régulation longitudinale de véhicule.

8. Procédé de fonctionnement selon l'une des revendications précédentes, comprenant en outre les étapes suivantes : définition d'au moins un état de la chaussée (107), d'un coefficient de frottement de la chaussée (108), d'une catégorie de véhicule (109) du véhicule tiers (2), d'un état de chargement de véhicule, d'un état du système de freinage de véhicule et/ou d'un paramètre spécifique aux pneus du véhicule (1), au moins l'un de ces paramètres intervenant dans la régulation longitudinale.

9. Système d'assistance au conducteur (100) destiné à la régulation longitudinale de véhicule d'un véhicule (1) par rapport à un véhicule tiers (2), de préférence destiné à la régulation de la vitesse et/ou de la distance, lequel est conçu pour mettre en oeuvre un procédé de fonctionnement selon l'une des revendications précédentes, le système d'assistance au conducteur (100) comprenant les éléments suivants :

- un dispositif de mise à disposition (110, 111) qui est exécuté pour mettre à disposition au moins une trajectoire probable (110) du véhicule (1) et/ou une trajectoire probable (111) du véhicule tiers (2) qui précède ; et
- un dispositif de régulation (114) qui est exécuté pour réaliser la régulation longitudinale de véhicule en fonction au moins de la trajectoire (110) probable du véhicule (1) et/ou de la trajectoire (111) probable du véhicule tiers (2) qui précède.

10. Véhicule utilitaire, de préférence poids lourd ou autobus, comprenant un système d'assistance au conducteur (100) selon la revendication 9.

**Fig. 1**

# Fig. 2

EP 2 840 006 B1

| vorausfahrendes Fremdfahrzeug | Fzg.-Klasse | 1 | 2 | 3 | 4 | 4 | 5 | 6 | 7 |
|---|---|---|---|---|---|---|---|---|---|
| | typ. Fahrzeug | Lkw-40 t/ Reisebus-hoch | Pkw | Pkw mit Caravan | SUV | Transporter | Lkw-12/ 24 t, Bus | Sportwagen | Motorrad |
| Silhouette | Höhe, von..bis [dm] | 35..40 | 14..15 | 20..26 | 16..18 | 20..31 | 22..28 | 11..14 | 13..18 |
| | Breite, von..bis [dm] | 23-25 | 16..19 | 18..25 | 18..20 | 18..20 | 22..25 | 17..20 | 6..10 |
| | Höhe : Breite, von..bis | 1,52..1,6 | 0,79..0,87 | 1,04..1,11 | 0,88..0,9 | 1,11..1,55 | 1..1,17 | 0,56..0,76 | 1,4..2,5 |
| typische Verzögerung [g] (bei typischer bzw. fahrbarer Geschwindigkeit, ABS, geeigneter Bereifung, mittlerer Zuladung, Fahrbahn gut - mitel - schlecht) | | | | | | | | | |
| Fahrbahn Reibwert-Klassen µF | 1: >0,8 (trocken) | 0,62/0,58/0,55 | 0,95/0,85/0,8 | 0,7/0,55/0,45 | 0,85/0,8/0,75 | 0,8/0,75/0,7 | 0,68/0,65/0,62 | 1,05/0,95/0,8 | 1,1/0,9/0,7 |
| | 2: >0,5..0,8 (nass, kein steh. Wasser) | 0,58/0,54/0,5 | 0,75/0,65/0,55 | 0,55/0,45/0,35 | 0,72/0,62/0,55 | 0,7/0,65/0,58 | 0,6/0,56/0,54 | 0,8/0,7/0,55 | 0,75/0,55/0,4 |
| | 3: 0,20..0,5 (steh. Wasser, griffig. Schnee) | 0,48/0,45/0,4 | 0,5/0,45/0,35 | 0,3/0,2/0,1 | 0,5/0,4/0,3 | 0,5/0,48/0,42 | 0,49/0,47/0,42 | 0,4/0,3/0,2 | 0,35/0,22/0,12 |
| | 4: < 0,20 (glatter schnee, Eis) | 0,20/0,19/0,18 | 0,2/0,18/0,16 | --- | 0,2/0,18/0,14 | 0,2/0,2/0,19 | 0,2/0,19/0,18 | 0,11/0,08/0,06 | --- |
| Fahrbahngüte: Eben-heit, Bodenwellen, Ausbesserungen | gut | x | x | | | | | x | x |
| | mittel | | | x | | x | x | | |
| | schlecht | | | | x | | | | |
| Fzg.-Geschwindigkeit [km/h] | | < 95/125 | >130 | <95 | >130 | <95 | <95 | > 130 | > 130 |
| folgendes Fahrzeug (Beispiele) | | Pkw | Sportwagen | Transporter | Pkw | Lkw-40 t | Pkw | Lkw-40 t | Bus |
| Beispiele (als mögliche Ist-Zustände und angenommener Fahrbahngüten, siehe "x") | | | | | | | | | |
| Reifentyp | Sommer, Winter, etc | Ganzjahres | S=Sommer, W=Winter | S=Sommer, W=Winter | S=Sommer, W=Winter | S=Sommer, W=Winter | S=Sommer, W=Winter | Ganzjahres | S=Sommer, W=Winter |
| Profilzustand | in Prozent vom Neuzustand | 50 | S=75, W=40 | S=30, W=90 | S=35, W=80 | S=80, W=80 | S=90, W=80 | 50 | S=80, W=80 |
| Beladung | in Prozent oder Personen | 4 Personen | 2 Personen | 1 Person | 3 Personen | 100% | 100% | 100% | 70% |
| Zustand Bremsanlage | Art (Scheibe/ Trommel), Temperatur, Beläge -> Faktor 0,6...1 | 1 | 1 | 1 | 1 | 1 | 1 | 0,85 | 1 |
| mögliche Verzögerung [g] | für µF_1 | 0,92 | S=1,05 | S=0,78 | S=0,69 | S=0,58 | S=0,74 | 0,51 | S=0,68 |
| | für µF_2 | 0,7 | S=0,8 | S=0,64 | S=0,54 | S=0,54 | S=0,58 | 0,44 | S=0,6 |
| | für µF_3 | 0,46 | S=0,39 | W=0,47 | W=0,35 | W=0,45 | W=0,36 | 0,34 | W=0,49 |
| | für µF_4 | 0,2 | W=0,09 | W=0,2 | W=0,16 | W=0,19 | W=0,17 | 0,1 | --- |

200

# Fig. 3

# Fig. 4

| | |
|---|---|
| Erfasse Fremdfahrzeug | S400 |

↓

| | |
|---|---|
| Kürzester Abstand | S401 |

↓

| | |
|---|---|
| Fahrzeugklasse | S402 |

↓

| | |
|---|---|
| Einfallswinkel | S403 |

↓

| | |
|---|---|
| eigene Geschwindigkeit | S404 |

↓

| | |
|---|---|
| 3D-Bahnkurve eigenes Fahrzeug | S405 |

↓

| | |
|---|---|
| Typ & Bahnkurve Strasse | S406 |

↓

| | |
|---|---|
| Fahrbahnzustand | S407 |

↓

| | |
|---|---|
| Fahrbahnreibwertklasse | S408 |

↓

| | |
|---|---|
| eigene Bremsverzögerung | S409 |

↓

| | |
|---|---|
| Bremsverzögerung Fremdfahrzeug | S410 |

↓

| | |
|---|---|
| Berechnen & Regeln Sicherheitsabstand | S411 |

Fig. 5A

Fig. 5B

# Fig. 6

```
Erfasse Fremdfahrzeug          S600

Kürzester Abstand              S601

Fahrzeugklasse                 S602

Einfallswinkel                 S603

eigene Geschwindigkeit         S604

3D-Bahnkurve Fahrzeug          S605

Typ & Bahnkurve Strasse        S606

Fahrbahnzustand                S607

Fahrbahnreibwertklasse         S608

3D-Bahnkurve Fremdfahrzeug     S609
```

S610

Nein    Kollision ?    Ja

# Fig. 6

| | |
|---|---|
| Ausgabe Warnsignal | S611 |

↓

| | |
|---|---|
| Start Timer | S612 |

↓

S613

Reaktion Fahrer

JA ← → NEIN

S614

| | |
|---|---|
| Kein Reglereingriff | |

| | |
|---|---|
| Unterschreiten Mindestabstand? | S615 |

↓

| | |
|---|---|
| Bremssteuerung | S616 |

↓

| | |
|---|---|
| Erkenne Fahrzeugklasse | S617 |

↓

| | |
|---|---|
| Sicherheitsabstand | S618 |

↓

| | |
|---|---|
| Ende Reglereingriff | S619 |

Fig. 7A

Fig. 7B

# Fig. 8

```
┌─────────────────────────────────────────────────┐
│ Ermittlung Passgefälle                          │ ⟍ S800
└─────────────────────────────────────────────────┘
                      │
                      ▼
┌─────────────────────────────────────────────────┐
│ Regelung auf Passabfahrt                        │ ⟍ S801
└─────────────────────────────────────────────────┘
                      │
                      ▼
┌─────────────────────────────────────────────────┐
│ Erfassung Ende Gefälle                          │ ⟍ S802
└─────────────────────────────────────────────────┘
                      │
                      ▼
┌─────────────────────────────────────────────────┐
│ Regelung auf neuen Sicherheitsabstand           │ ⟍ S803
└─────────────────────────────────────────────────┘
                      │
                      ▼
┌─────────────────────────────────────────────────┐
│ Regelung auf neuen Sicherheitsabstand in Ebene  │ ⟍ S804
└─────────────────────────────────────────────────┘
```

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011002275 A1
- EP 2529993 A1

- DE 102011108110 A1